(19) Europäisches Patentamt
European Patent Office
Office européen des brevets

(11) **EP 4 434 342 A1**

(12) **EUROPEAN PATENT APPLICATION**

(43) Date of publication:
**25.09.2024 Bulletin 2024/39**

(21) Application number: **23382257.6**

(22) Date of filing: **21.03.2023**

(51) International Patent Classification (IPC):
*A01N 1/02* (2006.01)   *A01N 25/10* (2006.01)
*A01N 25/12* (2006.01)   *A01N 25/22* (2006.01)
*A01N 25/24* (2006.01)   *A01N 25/26* (2006.01)
*A01N 25/30* (2006.01)   *A01N 65/20* (2009.01)

(52) Cooperative Patent Classification (CPC):
**A01N 1/02; A01N 25/10; A01N 25/12; A01N 25/22;
A01N 25/24; A01N 25/26; A01N 25/30; A01N 65/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Symborg, S.L.**
**30100 Murcia (ES)**

(72) Inventors:
• **JUÁREZ MOLINA, Jesús**
**30100 Murcia (ES)**

• **FERNÁNDEZ MARTÍN, Félix**
**30100 Murcia (ES)**
• **MARTINEZ RUIZ, Jesús**
**30100 Murcia (ES)**
• **TORRES VERA, Rocío**
**30100 Murcia (ES)**
• **MARTIN MARTINEZ, Jose Miguel**
**03690 San Vicente del Raspeig (ES)**
• **FUSTER ESTESO, Sara**
**03690 San Vicente del Raspeig (ES)**

(74) Representative: **Trupiano, Federica et al
Torner, Juncosa I Associats, S.L.
C/Pau Claris, 108, 1r 1a
08009 Barcelona (ES)**

(54) **ADHESIVE COMPRISING NATURAL GUMS AND USES THEREOF**

(57)    The present invention relates to an adhesive comprising at least a natural gum, and at least one further component selected from a carboxylic acid, DMSO, surfactin, and mixtures thereof, to the use of said adhesive in seed coating, in the production of granules and micro-granules and to induce germination of seeds. The present invention further relates to a seed or an inert core material provided with the adhesive, and to a coated seed or a granule and micro granule comprising the adhesive and a coating material.

EP 4 434 342 A1

**Description**

Field of the invention

The present invention relates to the field of agronomy. In particular, the present invention is related to adhesives, in particular adhesives comprising natural gums, suitable to be used in agriculture.

Background of the invention

Several activities related to the field of agronomy and agriculture involve the use of adhesive. For example, it is known that the use of an adhesive is crucial in seed coating and granule and microgranule preparations.

The seed coating consists of treating the surface of the seed with a material, a substance or a compound that favours the growth of the seed or protects it from adverse conditions such as pests and frost, after sowing. To treat the surface of the seeds, particular coating machines able to add homogeneously a material, a substance or a compound (e.g., an inert carrier, a colorant, a fungicide, a bio-fungicide, an insecticide, a bio-insecticide, a nematicide, a bio-nematicide, a fertiliser) together with water and an adhesive, are used. When the treated seed dries, the adhesive keeps the material, the substance or the compound on the seed surface, preventing it from falling off and protecting it from degradation. Therefore, the adhesive helps the seed treatment to remain optimal until the time of sowing, making it possible the storage of the seeds. In seed coating, the seeds are provided with materials, substances or compounds that have beneficial effects for plant growth and yield. The term "seed coating" includes different technologies, i.e., film coating, encrusting and pelleting. These technologies mainly differ in the thickness of the coating and in the consequent seed weight increase.

In the agricultural industry, granules and microgranules are based on the use of a core of inert material (e.g. silica) that is repeatedly coated with adhesive, wherein the adhesive acts as a binder for one or more active ingredients (such as, for example, colorants, fungicides, bio-fungicides, insecticides, bio-insecticides, nematicides, bio-nematicides, fertilisers (including plant biostimulants).

For an effective seed coating or an efficient granule and microgranule preparation, the coating material, substance or compound, or the active ingredient, should remain intact and adhere to the seed or the granule and microgranule core until they are exposed to water. Compounds such as polyvinyl alcohol, soybean flour and natural gums are known as suitable adhesive compounds for seed coating.

The adhesives currently available have several drawbacks. In particular, they often show unsatisfactory adhesion capacity, so that the coating material is removed from the seed before sowing, and the beneficial effects of the coating are lost. In addition, these adhesives can adhere coating materials in a non-homogeneous manner, forming agglomerations randomly distributed on the surface on the seeds, instead of a homogeneous coating, thus reducing or jeopardizing the beneficial effects of the coating material. Additionally, during, for example, handling and transportation the coating may crack and/or in can be removed from the seeds, thus creating dust which can be harmful to users. Also, known adhesives based on natural substances have limited durability and are prone to microbial growth.

Currently, synthetic adhesives allow homogeneous impregnation and high adhesive capacity but can have a negative impact on human and animal health and the environment. Also, they can be substances of difficult degradation.

Therefore, there is a need for adhesives that have improved properties such as, for example, reduced dusting, increased homogeneity of impregnation of the seeds, improved durability, improved resistance to microbial growth, and that do not have a negative impact on human and animal health and the environment.

Summary of the invention

It is an aim of the present invention to solve the above mentioned problems and to provide an adhesive or a binder having improved properties.

Another aim of the present invention is to provide an adhesive or a binder having reduced dusting.

A further aim of the present invention is to provide an adhesive or a binder which allows a homogeneous impregnation of the seeds, and provides homogeneous distribution of active ingredients in granule and microgranule preparations.

Also aim of the present invention is to provide an adhesive or a binder having high adhesion capacity.

A further aim of the present invention is to provide an adhesive or a binder having improved durability and improved resistance to microbial growth.

A further aim of the present invention is to provide an adhesive or a binder which does not have a negative impact on human and animal health and the environment.

Still another aim of the present invention is to provide an adhesive that induces the germination of the seed which is applied to.

These and other aims are achieved by the present invention, which relates to an adhesive, particularly an adhesive composition, comprising at least a natural gum and at least one further component selected from a carboxylic acid, DMSO, surfactin, and mixtures thereof.

Detailed description of the invention

Object of the present invention is an adhesive, particularly an adhesive composition, comprising at least a natural gum and at least one further component selected from a carboxylic acid, DMSO, surfactin, and mixtures thereof.
According to embodiments, the composition of the invention is in the form of a liquid, a solid or a gel.
According to embodiments, when the composition is in liquid form, it may be in the form of an aqueous liquid or an emulsifiable concentrate. In embodiments, when the composition is in solid form, it may be in the form of powder or granules. Preferably, the composition (i.e., the adhesive composition) is in liquid form.
Preferably, the adhesive comprises water. In other words, the adhesive is, preferably, an aqueous adhesive, i.e., an aqueous adhesive composition.
In embodiments, the natural gum is selected from Arabic gum, tragacanth gum, Peach gum, karaya gum, Gaidi gum, Ghatti gum, rosin resin, Kerensis gum, Guar gum and mixtures thereof. Preferably, the natural gum is Arabic gum, tragacanth gum, and mixtures thereof. In embodiments, the natural gum is Arabic gum.
In embodiments, the amount of the natural gum may be in the range from 0.5% to 55% by weight of the adhesive, preferably 0.6% to 35% by weight of the adhesive, more preferably from 0.6% by weight to 32.5% by weight of the adhesive.
The amount of the natural gum, preferably Arabic gum, may be in the range from 5% to 55% by weight of the adhesive, preferably 15% to 35% by weight of the adhesive, more preferably from 17.5% by weight to 32.5% by weight of the adhesive.
The amount of the natural gum, preferably tragacanth gum, may be in the range from 0.5% by weight to 2% by weight of the adhesive, preferably, from 0.75% by weight to 1.5% by weight of the adhesive. In embodiments, the amount of the natural gum, preferably tragacanth gum, may be in the range from 0.5% by weight to 2% by weight of the adhesive, preferably, from 0.75% by weight to 1.5% by weight of the adhesive. According to embodiments, the adhesive has a viscosity in the range from 15 mPa.s to 8500 mPa.s, preferably from 15 mPa.s to 250 mPa.s, more preferably from 35 mPa.s to 230 mPa.s, measured at room temperature according to ASTM D3236-88 standard. It has been surprisingly observed that, when the adhesive has a viscosity in the mentioned ranges, a particularly effective seed coating may be obtained.
According to embodiments, the adhesive comprises a natural gum, preferably selected from Arabic gum and tragacanth gum, and a carboxylic acid, preferably lactic acid.
In embodiments, the carboxylic acid may be selected from saturated aliphatic carboxylic acid, unsaturated aliphatic carboxylic acid, aromatic carboxylic acid, polycarboxylic acid, hydroxy and keto carboxylic acid, and mixtures thereof. For example, suitable carboxylic acids are lactic acid, citric acid, caffeic acid, gallic acid, glycolic acid, oxalic acid, malonic acid, ascorbic acid, acetic acid, formic acid, crotonic acid, butyric acid, palmitic acid, stearic acid, adipic acid, sorbic acid, oleic acid, linoleic acid, benzoic acid, salicylic acid, phthalic acid, cinnamic acid, tartaric acid, pyruvic acid and mixtures thereof.
Preferably, the carboxylic acid is lactic acid.
It was surprisingly observed that, when the adhesive includes a carboxylic acid, preferably lactic acid, a significant reduction of dusting and an improved adhesion capacity is obtained. Additionally, it was observed that, when the adhesive includes lactic acid an increased resistance to microbial growth is obtained.
According to embodiments, the adhesive composition may further comprise one or more acid biocidal substances, and one or more non-acid biocidal substances, or mixtures thereof, that have an additional effect on biological control.
The amount of carboxylic acid may be in the range from 0.005% by weight to 20% by weight of the adhesive, preferably from 0.01% by weight to 5% by weight of the adhesive, more preferably, from 0.02% by weight to 4% by weight of the adhesive. For example, when the natural gum is Arabic gum, the amount of lactic acid may be in the range from 0.1% by weight to 10% by weight of the adhesive, for example from 0.1% by weight to 5% by weight of the adhesive. For example, when the natural gum is tragacanth gum, the amount of lactic acid may be in the range from 0.01% by weight to 0.5% by weight of the adhesive.
According to embodiments, the adhesive comprises a natural gum, preferably selected from Arabic gum and tragacanth gum, and DMSO.
It was surprisingly observed that, when the adhesive includes DMSO (dimethyl sulfoxide), a particular homogeneous coating can be obtained.
Moreover, it was surprisingly observed that, when the adhesive includes DMSO, the germination of the seeds in particularly enhanced.
Therefore, a further object of the present invention is the use of the adhesive composition of the invention to induce germination of seeds.

The amount of DMSO may be in the range from 0.05% by weight to 50% by weight of the adhesive, preferably from 1% by weight to 40% by weight of the adhesive, more preferably, from 5% by weight to 35% by weight of the adhesive.

According to embodiments, the adhesive comprises a natural gum, preferably selected from Arabic gum and tragacanth gum, a carboxylic acid, preferably lactic acid, and DMSO.

It was surprisingly observed that, when the adhesive includes both a carboxylic acid (preferably, lactic acid) and DMSO (dimethyl sulfoxide), in addition to the advantageous technical effects above discussed, i.e., a reduction of dusting and an improvement of coating homogeneity, an adhesive having improved adhesion capacity is obtained.

According to embodiments, the adhesive comprises a natural gum, preferably selected from Arabic gum and tragacanth gum, and surfactin.

Surfactin is a bacterial cyclic lipopeptide produced by the Gram-positive endospore-forming bacteria *Bacillus subtilis.*

Advantageously, when the adhesive comprises surfactin, a particularly effective impregnation of the seeds can be obtained.

The amount of the surfactin may be in the range from 0.01% by weight to 3% by weight of the adhesive, preferably, from 0.03% by weight to 1.5% by weight of the adhesive.

In embodiments, the adhesive comprises a natural gum, preferably selected from Arabic gum and tragacanth gum, a carboxylic acid, preferably lactic acid, and surfactin.

In embodiments, the adhesive comprises a natural gum, preferably selected from Arabic gum and tragacanth gum, DMSO and surfactin.

In embodiments, the adhesive comprises a natural gum, preferably selected from Arabic gum and tragacanth gum, a carboxylic acid, preferably lactic acid, DMSO and surfactin.

In embodiments, the adhesive further comprises one or more plasticizers. The plasticizer may be selected from synthetic plasticizers, natural plasticizers and mixtures thereof. For example, suitable synthetic plasticizers are sorbitol, rosin esters, glycols, xylitol, paraffin oil, Petrolatum jelly (vaseline) and mixtures thereof. For example, suitable natural plasticizers are glycerol, sunflower oil, soybean oil, castor oil, and mixtures thereof.

In embodiments, the plasticizer is selected from sorbitol, rosin esters, glycols, xylitol, paraffin oil, Petrolatum jelly (vaseline), glycerol, sunflower oil, soybean oil and, castor oil, and mixtures thereof.

Preferably, the plasticizer is selected from glycerol, sorbitol and mixtures thereof. In embodiments, the adhesive further comprises glycerol and/or sorbitol.

The amount of plasticizer may be in the range from 0.01 % by weight to 30% by weight of the adhesive, preferably, from 0.1% by weight to 15% by weight of the adhesive.

In embodiments, the amount of glycerol may be in the range from 0.05% by weight to 10% by weight of the adhesive, preferably, from 0.1% by weight to 8% by weight of the adhesive. For example, when the natural gum is Arabic gum, the amount of glycerol may be in the range from 1% by weight to 8% by weight of the adhesive. For example, when the natural gum is tragacanth gum, the amount of glycerol may be in the range from 0.05% by weight to 0.5% by weight of the adhesive.

In embodiments, the amount of sorbitol may be in the range from 5% by weight to 15% by weight of the adhesive, preferably, from 8% by weight to 12% by weight of the adhesive.

In embodiments, the adhesive further comprises one or more surfactants. The surfactant may be selected from synthetic surfactants, natural surfactants and mixtures thereof. For example, suitable synthetic surfactants are ammonium laureth sulfate, quaternium-18 bentonite, laureth-23 and disodium cocoamphodipropionate, and mixtures thereof. For example, suitable natural surfactants are surfactin, saponin and mixtures thereof. Preferably, the surfactant is selected from surfactin and saponin and mixtures thereof.

Advantageously, when the adhesive comprises a surfactant, e.g., surfactin, a particularly effective impregnation of the seeds can be obtained.

The amount of the surfactant may be in the range from 0.01% by weight to 30% by weight of the adhesive, preferably, from 0.1% by weight to 15% by weight of the adhesive.

In addition, other substances such as aluminium chloride and boric acid as a crosslinking agent can improve the adhesive properties of adhesives formulations. The adhesive of the invention can be produced by mixing the different components according to techniques that are, per se, known in the art.

Advantageously, the adhesive of the present invention is suitable to be used in combination with several coating materials, both when the adhesive composition is used in seed coating or in the production of granules and microgranules, particularly as a binder.

One or more coating material can be selected from at least one inert carrier (such as talc or graphite, particularly when the coating material is applied to a seed), at least one colorant, at least one fungicide, at least one bio-fungicide, at least one insecticide, at least one bio-insecticide, at least one nematicide, at least one bio-nematicide, at least one fertiliser (including plant biostimulant), and mixtures thereof.

In embodiments, the fungicide is selected from copper, mercury, tin, zinc, metallic and sulfur compounds, organophosphorus compounds, dithiocarbamates, carbamates, halogenated hydrocarbons, aromatic nitrocompounds, quinines, anilides, guanidine compounds, phthalimides, pyrimidines, thiodiazoles, triazines, isoxazolones, imidazoles, antibiotics, oils, aldehydes, ketones, oxides and mixtures thereof.

In embodiments, the bio-fungicide is selected from *Trichoderma* spp., *Bacillus* spp., *Streptomyces* spp.spp., *Coniothyrium* spp.spp., *Aspergillus* spp., *Aureobasidium* spp., *Candida* spp. *Clonostachys* spp., *Coniothyrium* spp., *Metschnikowia* spp., *Phlebiopsis* spp., *Pseudomonas* spp., *Saccharomyces* spp., *Streptomyces spp., Pythium* spp. and mixtures thereof.

In embodiments, the bio-fungicide is selected from bioactive compounds derived from one or more microorganisms selected from *Trichoderma* spp., *Bacillus* spp., *Streptomyces* spp., *Coniothyrium* spp., *Aspergillus* spp., *Aureobasidium* spp., *Candida* spp., *Clonostachys* spp., *Coniothyrium* spp., *Metschnikowia* spp., *Phlebiopsis* spp., *Pseudomonas* spp., *Saccharomyces* spp., *Streptomyces* spp., *Pythium* spp. and mixtures thereof.

In embodiments, the insecticide is selected from organochlorine, organophosphate, carbamate, pyrethroid, neonicotinoid, ryanoid and avermectin, and mixtures thereof. In embodiments, the bio-insecticide is selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp., and mixtures thereof.

In embodiments, the bio-insecticide is selected from bioactive compounds derived from one of more microorganisms selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp., and mixtures thereof.

In embodiments, the nematicide is selected from organophosphate, carbamate and a mixture thereof.

In embodiments, the bio-nematicide is selected from *Pasteuria* spp., *Bacillus* spp., *Paecilomyces* spp., and mixtures thereof.

In embodiments, the bio-nematicide is selected from bioactive compounds derived from one of more microorganisms selected from *Pasteuria* spp., *Bacillus* spp., *Paecilomyces* spp., and mixtures thereof.

In embodiments, the fertiliser is selected from organic, organo-mineral and inorganic macronutrients, inorganic micronutrients, liming materials, organic and inorganic soil improvers, growing mediums, nitrification, denitrification and urease inhibitors, microbial and non-microbial plant biostimulants, and mixtures thereof..

In embodiments, the microbial plant biostimulant may be selected from *Trichoderma harzianum,* clay-embedded *Glomus iranicum* var. *tenuihypharum* var. nov and mixtures thereof.

In embodiments, the coating material may be selected from microbial plant biostimulant (e.g., *Trichoderma harzianum,* clay-embedded *Glomus iranicum* var. *tenuihypharum* var. nov), organo-mineral fertiliser based on amino acids, and mixtures thereof.

Also object of the invention is, thus, the use of the adhesive according to the invention in seed coating.

The adhesive can be provided to seeds, optionally together with one or more coating material, using techniques that are, per se, known in the art, for example, using a SATEC CONCEPT ML 2000 equipment (Satec Equipment GmBh, Elmshorn, Germany).

In embodiments, the composition of the invention can be provided to an inert material, optionally together with one or more coating material, in order to obtain granule and microgranule. Granules and microgranules (e.g., granule and microgranule preparations) can be obtained using techniques that are, per se, known in the art, for example, using fluid bed technology. This technique consists of adding particles to an air current, remaining in suspension. From the top, a liquid is sprayed into the fluid bed. Particles in contact with the liquid become wet and sticky. Sticky particles collide with other particles and adhere to them, forming granules or microgranules depending on their final size.

Another object of the invention is, thus, the use of the adhesive according to the invention in the production of granules and/or microgranules.

Particularly, in embodiments, the adhesive composition of the invention is used as a binder in the production of granule and microgranule, to provide an inert core with one or more coating materials.

According to embodiments, the inert material to be used as inert core in a granule and microgranule preparation is selected from silicon oxides as diatomite and graded sands, calcium oxides as hydrated lime, sulphates as gypsum, carbonates as calcite, silicates as talc, pyrophyllite and clays.

Another object of the invention is a seed or an inert core material provided with the adhesive of the invention.

A further object of the invention is a coated seed or a granule and/or microgranule , wherein the coated seed or the granule or microgranule comprises the adhesive of the invention and at least one coating material.

In embodiments, the seed is selected from extensive crop seeds and horticultural crops seeds. For example, suitable extensive crop seed are corn seeds, wheat seeds, soybean seeds, cotton seeds, sunflower seeds, rice seeds, alfalfa seeds and canola seeds. For example, suitable horticultural crops seeds are lettuce seeds, garlic seeds, carrot seeds and tomato seeds. In embodiments, the seed can be selected from a corn seed, a wheat seed, a soybean seed, a cotton seed, a sunflower seed, a rice seed, an alfalfa seed, a canola seed, a lettuce seed, a garlic seed, a carrot seed and a tomato seed. For example, the seed may be a corn seed, a soybean seed, a cotton seed or a wheat seed.

One or more coating material can be selected from at least one inert carrier (such as talc or graphite, particularly when a coating material is applied to a seed), at least one colorant, at least one fungicide, at least one bio-fungicide, at least one insecticide, at least one bio-insecticide, at least one nematicide, at least one bio-nematicide, at least one fertiliser, for example a plant biostimulant, and mixtures thereof.

In embodiments, the fungicide is selected from copper, mercury, tin, zinc, metallic and sulfur compounds, organophosphorus compounds, dithiocarbamates, carbamates, halogenated hydrocarbons, aromatic nitrocompounds, quinines, anilides, guanidine compounds, phthalimides, pyrimidines, thiodiazoles, triazines, isoxazolones, imidazoles, antibiotics, oils, aldehydes, ketones, oxides and mixtures thereof.

In embodiments, the bio-fungicide is selected from *Trichoderma* spp., *Bacillus* spp., *Streptomyces* spp., *Coniothyrium* spp., *Aspergillus* spp., *Aureobasidium* spp., *Candida* spp., *Clonostachys* spp., *Coniothyrium* spp., *Metschnikowia* spp., *Phlebiopsis* spp., *Pseudomonas* spp., *Saccharomyces* spp., *Streptomyces* spp., *Pythium* spp. and mixtures thereof.

In embodiments, the bio-fungicide is selected from bioactive compounds derived from one or more microorganisms selected from *Trichoderma* spp., *Bacillus* spp., *Streptomyces* spp., *Coniothyrium* spp., *Aspergillus* spp., *Aureobasidium* spp., *Candida* spp., *Clonostachys* spp., *Coniothyrium* spp., *Metschnikowia* spp., *Phlebiopsis* spp., *Pseudomonas* spp., *Saccharomyces* spp., *Streptomyces* spp., *Pythium* spp. and mixtures thereof.

In embodiments, the insecticide is selected from organochlorine, organophosphate, carbamate, pyrethroid, neonicotinoid, ryanoid and avermectin, and mixtures thereof. In embodiments, the bio-insecticide is selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp., and mixtures thereof.

In embodiments, the bio-insecticide is selected from bioactive compounds derived from one of more microorganisms selected from *Bacillus* spp., *Chromobacterium* spp., *Beauveria* spp., *Akantomyces* spp., *Ampelomyces* spp., *Cryptophlebia* spp., *Cydia* spp., *Fusarium* spp., *Purpureocillium* spp., *Spodoptera* spp., *Metarhizium* spp., *Isaria* spp., and mixtures thereof.

In embodiments, the nematicide is selected from organophosphate, carbamate and mixtures thereof.

In embodiments, the bio-nematicide is selected from *Pasteuria* spp., *Bacillus* spp., *Paecilomyces* spp., and mixtures thereof.

In embodiments, the bio-nematicide is selected from bioactive compounds derived from one of more microorganisms selected from *Pasteuria* spp., *Bacillus* spp., *Paecilomyces* spp., and mixtures thereof.

In embodiments, the fertiliser is selected from organic, organo-mineral and inorganic macronutrients, inorganic micronutrients, liming materials, organic and inorganic soil improvers, growing mediums, nitrification, denitrification and urease inhibitors, microbial and non-microbial plant biostimulants, and mixtures thereof..

In embodiments, the microbial plant biostimulant may be selected from *Trichoderma harzianum,* clay-embedded *Glomus iranicum* var. *tenuihypharum* var. nov and mixtures thereof.

In embodiments, the coating material may be selected from microbial plant biostimulant (e.g., *Trichoderma harzianum,* clay-embedded *Glomus iranicum* var. *tenuihypharum* var. nov), organo-mineral fertiliser based on amino acids, and mixtures thereof.

In embodiments, the microbial biostimulant may be selected from *Trichoderma harzianum,* clay-embedded *Glomus iranicum* var. *tenuihypharum* var. nov and mixtures thereof.

Additional advantageous features of the invention will be apparent from the following, non-limiting, experimental section.

Brief description of the Figures

Figure 1: Appearance of the Arabic gum powder.
Figure 2: Dimensions of the 100% cotton textile material test samples and scheme of the T-peel test.
Figure 3: Typical T-peel force-displacement curves of textile material/adhesive joints.
Figure 4: Satec Concept ML 2000 laboratory rotary coater.
Figure 5: Heubach test measurement equipment (Heubach DUSTMETER Gmbh, Salzburg, Austria).
Figure 6: Appearance of the just-prepared adhesives.
Figure 7: Appearance of the GA and GA/AcL adhesives after 63 days (GA) and 98 days (GA/AcL) of being prepared, respectively.
Figure 8: ATR-IR spectra of the solid GA and GA/AcL adhesives.
Figure 9: 2800-3000 cm$^{-1}$ region of the ATR-IR spectra of the solid GA and GA/AcL adhesives.
Figure 10: 1200-1800 cm$^{-1}$ region of the ATR-IR spectra of the solid GA and GA/AcL adhesives.

Figure 11: Variation of mass as a function of temperature for the solid GA and GA/AcL adhesives. TGA experiments.

Figure 12: Variation of the derivative of mass as a function of temperature for the solid GA and GA/AcL adhesives. DTGA experiments.

Figure 13: Molecular weight distribution curves of the solid GA and GA/AcL adhesives.

Figure 14: Appearance of the adhesive joints made with the solid GA and GA/AcL adhesives, after T-peel test.

Figure 15: Arabic gum powder.

Figure 16: ATR-IR spectra of the solid GA/SB/AcL and GA/SB/AcL/DMSO adhesives.

Figure 17: 900-1200 cm$^{-1}$ region of the ATR-IR spectra of the solid GA/SB/AcL and GA/SB/AcL/DMSO adhesives.

Figure 18: TGA curves of the solid GA/SB/AcL and GA/SB/AcL/DMSO adhesives.

Figure 19: DTGA curves of the solid GA/SB/AcL and GA/SB/AcL/DMSO adhesives.

Figure 20. Appearance of the adhesive joints made with GA/SB/AcL and GA/SB/AcL/DMSO adhesives, after T-peel test.

Figure 21: Appearance of the clay-embedded *Glomus iranicum* var. *tenuihypharum* var. nov impregnated corn seeds with Arabic gum adhesives with and without DMSO.

Figure 22: ATR-IR spectra of the solid Arabic gum adhesives made with sorbitol and different amounts of DMSO.

Figure 23. TGA curves of the solid Arabic gum adhesives made with sorbitol and different amounts of DMSO.

Figure 24: DTGA curves of the solid Arabic gum adhesives made with sorbitol and different amounts of DMSO.

Figure 25: Appearance of the adhesive joints made with Arabic gum adhesives made with sorbitol and different amounts of DMSO, after T-peel test.

Figure 26: Appearance of the clay-embedded *Glomus iranicum* var. *tenuihypharum* var. nov impregnated corn seeds by using Arabic gum adhesives made with sorbitol and different amounts of DMSO.

Figure 27: ATR-IR spectra of the solid Arabic gum adhesives made with different amounts of glycerol and lactic acid, with and without DMSO.

Figure 28: 2600-3050 cm$^{-1}$ region of the ATR-IR spectra of the solid Arabic gum adhesives made with different amounts of glycerol and lactic acid, with and without DMSO.

Figure 29: 900-1200 cm$^{-1}$ region of the ATR-IR spectra of the solid Arabic gum adhesives made with different amounts of glycerol and lactic acid, with and without DMSO.

Figure 30: TGA curves of the solid Arabic gum adhesives made with different amounts of glycerol and lactic acid, with and without DMSO.

Figure 31: DTGA curves of the solid Arabic gum adhesives made with different amounts of glycerol and lactic acid, with and without DMSO.

Figure 32: Appearance of the adhesive joints made with textile material/adhesive/textile material joints made with the Arabic gum adhesives containing different amounts of glycerol and lactic acid, with and without DMSO, after T-peel test.

Figure 33. Appearance of the tragacanth gum powder.

Figure 34: HR-160 laboratory rotary coater.

Figure 35: ATR-IR spectra of the tragacanth gum adhesives.

Figure 36: 2600-3600 cm$^{-1}$ region of the ATR-IR spectra of the tragacanth gum adhesives.

Figure 37: 1550-1800 cm$^{-1}$ region of the ATR-IR spectra of the tragacanth gum adhesives.

Figure 38: TGA curves of the tragacanth gum adhesives.

Figure 39: DTGA curves of the tragacanth gum adhesives.

Figure 40: Appearance of textile material/tragacanth gum adhesive joints, after T-peel tests.

Figure 41: Appearance of the corn seeds impregnated with clay-embedded *Glomus iranicum* var. *tenuihypharum* var. nov by using the tragacanth gum adhesives.

Figure 42. Germination percentage (%) of corn seeds treated with different Arabic gum adhesives containing glycerol and lactic acid, with and without DMSO, with and without clay-embedded *Glomus iranicum* var. *tenuihypharum* var. nov, after 48 hours of incubation with water. Seeds treated with water were used as control.

Experimental section

Example 1 - Increased microbial growth resistance and structural changes in Arabic gum adhesives containing lactic acid

**1. Raw materials**

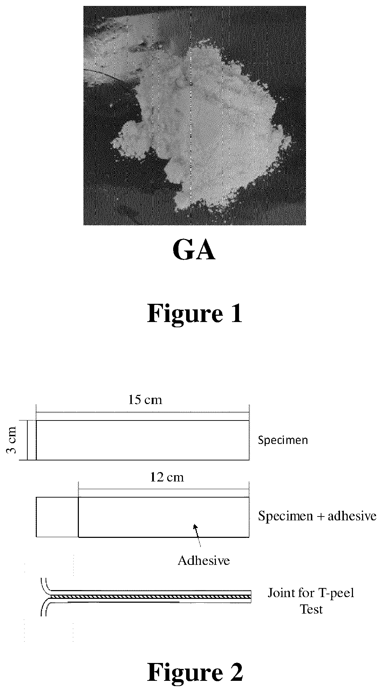

Arabic gum (GA). GA powder (batch no. 0097712 and 17655601) wase supplied by GUINAMA S.L.U (La Pobla de Vallbona, Valencia, Spain) and GA powder (batch 17655601) was supplied by Pharmur (Scharlab S.L., Sentmenat, Barcelona, Spain) - Figure 1.

Lactic acid (AcL). AcL (Pharma grade) with 90.8 wt.% purity and less than 95 % S-enantiomer was supplied by Panreac (Barcelona, Spain).

## 2. Used natural gum-based adhesives

- Adhesive made with Arabic gum - GA.
- Adhesive made with Arabic gum and lactic acid - GA/AcL.

Table 1 show the composition by weight (percentage) of the Arabic gum-based adhesives without and with lactic acid.

**Table 1.** Nomenclature and composition in percentage by weight of the Arabic gum adhesives without and with lactic acid.

| Adhesive | GA (%) | AcL (%) | $H_2O$ (%) |
|---|---|---|---|
| GA | 15-35 | - | add to complete 100% |
| GA/AcL | 15-35 | 0.1-5 | add to complete 100% |

## 3. Experimental techniques

*Infrared spectroscopy in attenuated total reflectance mode (ATR-IR spectroscopy).* ATR-IR spectroscopy has been used to characterize the chemical composition of the adhesives. The ATR-IR spectra were obtained in an Alpha spectrometer (Bruker Optik GmbH, Ettlinger, Germany) using a germanium prism. The angle of incidence of the IR beam was 45° and 50 scans were performed with a resolution of 4 $cm^{-1}$. To compare the ATR-IR spectra, they have been normalized to the most intense band (C-O-C stretching at about 1100 $cm^{-1}$).

*Thermal Gravimetric Analysis (TGA).* The thermal degradation and the structure of the adhesives were assessed in a TGA Q500 equipment (TA Instruments, New Castle, DE, USA) under nitrogen atmosphere (50 mL/min). 5-10 mg sample was placed in a platinum crucible and heated from 25 °C to 800 °C using a heating rate of 10 °C/min. *Evaluation of the resistance to microbial growth of the Arabic gum adhesives.* The resistance to microbial growth of the adhesives was evaluated by visual inspection. The adhesive container was checked monthly for determining the appearance of microbial growth and photos were taken.

*Determination of molecular weights by gel permeation chromatography (GPC).* The determination of the average molecular weights of the solid adhesives has been carried out at the Institute of Science and Technology of Polymers (ICTP) of the Scientific Research Center (CSIC) in Madrid (Spain). The average molecular weights ($M_n$, $M_w$ and $M_z$) have been determined in a Shimadzu (Kyoto, Japan) modular system comprising a DGU-20A3 solvent degasser, an LC-20AD pump, a column oven, an HT-20A HT autosampler and a RID-10A refractive index detector. The samples were dissolved in the Milli-Q water-based mobile phase with $NaNO_3$ (0.2 M) and $NaHPO_4$ (0.01 M).

*T-peel test.* The intrinsic adhesion of the Arabic gum adhesives was evaluated by T-peel test of 100 % cotton textile material/adhesive joints; the dimensions of the textile material test samples were 15 cm long and 3 cm width (Figure 2).

For making the adhesive joints, the adhesive was applied with a round tin end brush no. 20 on each test piece over a length of 12 cm (Figure 2), the specimens were allowed to dry for 1 hour. Then, a second layer of liquid adhesive was applied on both test specimens and they were placed in contact, and a 2 kg rubber roller was passed 5 times over the joint without exerting pressure. The joint was left to dry for 72 hours, weighed (for determining the adhesive thickness), and tested in a Zwick/Roell Z005 universal testing machine (San Cugat del Vallés, Spain), a cross-head speed of 10 mm/min was used.

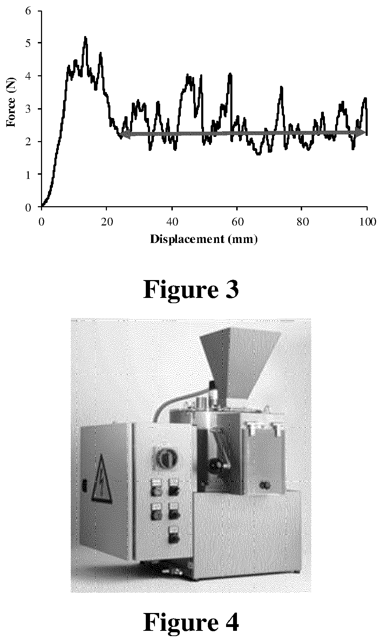

During the adhesion test, a curve of force versus displacement is obtained (Figure 3). The value of the adhesion force was taken as the average between 25 and 100 mm of displacement (the double arrow in Figure 3), using the central values to minimize errors. T-peel strength values were expressed as N/m and were calculated as the ratio of the average force to the peeled adhesive front (0.03 m).

The adhesion of the textile material/Arabic gum adhesive/textile material joints was expressed by the T-peel strength value and the locus of failure.

There are three main kind of loci of failure in the adhesive joints: adhesion failure (A), cohesive failure of the adhesive (C), and cohesive failure of the substrate (S).

- Adhesion failure (A): The adhesive separates from one of the substrates (separation at the substrate-adhesive interface).
- Cohesive failure of the adhesive (C): The rupture is produced within the adhesive layer. This failure is obtained when the cohesion of the adhesive is lower than the one of the substrate and the adhesion between the adhesive and the substrate surface.
- Cohesive failure of the substrate (S): The substrate is broken during the adhesion test. This failure is obtained when the cohesion of the substrate is lower than the one of the adhesive and the adhesion between the adhesive and the substrate surface.

***Procedure of impregnation of the corn seeds with Arabic gum adhesives***

The impregnation of corn seeds with Resid HC - clay-embedded *Glomus iranicum var. tenuihypharum* var. nov - (Symborg SL, Murcia, Spain) by using the Arabic gum adhesives was carried out in a SATEC CONCEPT ML 2000 equipment (Satec Equipment GmBh, Elmshorn, Germany) with a capacity of 0.5-2.5 $dm^3$ (Figure 4). 400 g corn seeds were placed into the laboratory coater, the equipment was turned on at maximum power and the adhesive and the clay-embedded *Glomus iranicum var. tenuihypharum* var. nov was added alternately and continuously, little by little, in several cycles, the final addition was made with the remaining adhesive.

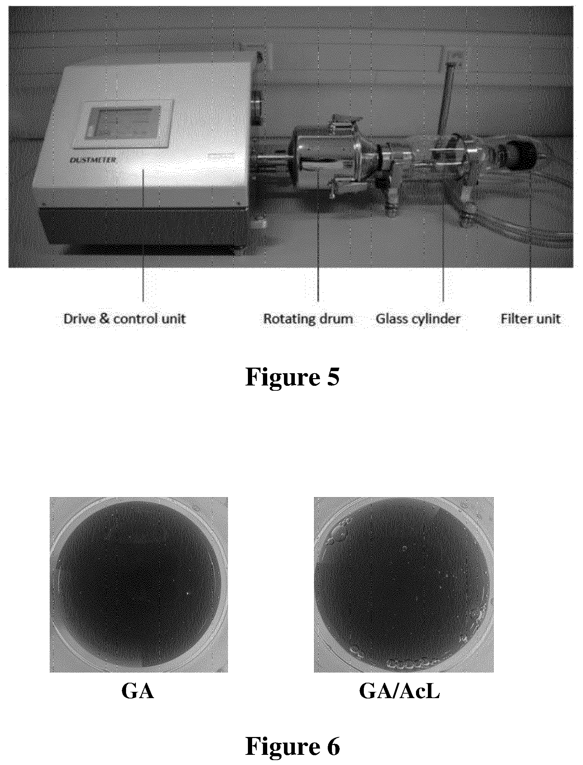

***Heubach test*** The Heubach test was carried out in a Dustmeter equipment (Heubach DUSTMETER Gmbh, Salzburg, Austria) (Figure 5). The equipment consists of a control unit that allows entering the test parameters, a rotating drum with steel blades, a glass bottle and a container with a fiberglass filter (Whatman GF 92 or Macherey Nagel Type MN 85/70 BF or equivalent specification).

The parameters used to carry out the Heubach test of the clay impregnated corn seeds were as follow: Rotation speed: 30 rpm; air flow: 20 L/min; test time: 120 seconds.

To carry out the test, 100 g impregnated and dry seeds were placed into the rotating drum, the equipment was assembled and the test started. The values obtained were expressed in g powder/100 kg impregnated seeds, calculated according to equation (1).

$$dust\ emission \left(\frac{g}{100\ kg\ seeds}\right) = \frac{(m_f - m_i)x10^5}{m_{seeds}} \qquad Equation\ (1)$$

where $m_f$ is the final mass of filter and housing, $m_i$ is the initial mass of filter and housing, and $m_{seeds}$ is the mass of the impregnated seeds (100 g).

For each impregnated seed, 4 replicates were made and averaged.

**4. Results and discussion**

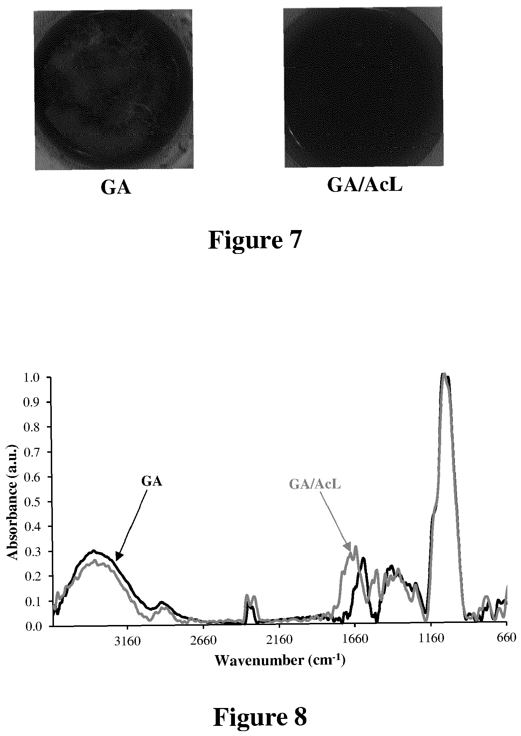

Figure 6 shows the appearance of the freshly prepared Arabic gum adhesive solutions and Figure 7 shows the appearance of the same adhesives after 63-98 days. After 63 days, microbial growth appears in GA adhesive, whereas GA/AcL adhesive remains stable after 98 days. Therefore, the addition of lactic acid increases the microbial growth resistance of the Arabic gum adhesive.

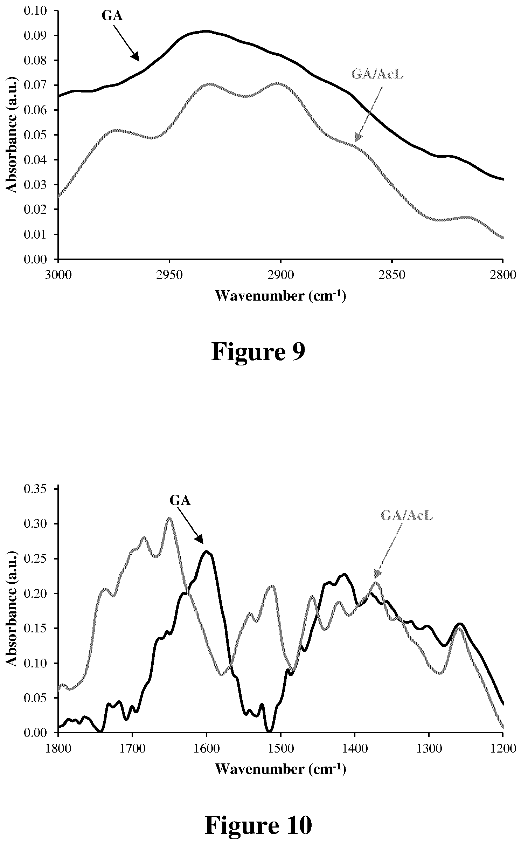

Figure 8 shows the ATR-IR spectra of the solid GA and GA/AcL adhesives. The assignment of the main absorption bands is shown in Table 2. Both ATR-IR spectra are somewhat similar, but they differ in some regions. The addition of AcL changes the structure of the C-H groups (Figure 9) and the ratio of the C=O stretching bands (Figure 10). Furthermore, the addition of AcL to GA increases the wavenumber of the C=C stretching band from 1650 to 1687 $cm^{-1}$ and a new C=C stretching band appears at 1512 $cm^{-1}$ (Figure 10). On the other hand, the addition of AcL to GA decreases the intensity of the C-O-C stretching band at 1457 $cm^{-1}$, and increases the ones of the CO-C bands between 1350 and 1390 $cm^{-1}$. Consequently, the addition of AcL changes the structure of the Arabic gum adhesive.

| Table 2. Assignment of the main absorption bands of the ATR-IR spectra of the solid GA and GA/AcL adhesives. | |
|---|---|
| Wavenumber ($cm^{-1}$) | Assignment |
| 3370 | O-H stretching |
| 2937 | C-H stretching |
| 1744 | C=O stretching |

(continued)

| Table 2. Assignment of the main absorption bands of the ATR-IR spectra of the solid GA and GA/AcL adhesives. | |
| --- | --- |
| Wavenumber (cm$^{-1}$) | Assignment |
| 1687-1650, 1512 | C=C stretching |
| 1457 | O-H bending |
| 1371 | C-O-C stretching |
| 1260 | C-O-C stretching in ring |
| 1129,1056 | C-O-C stretching |

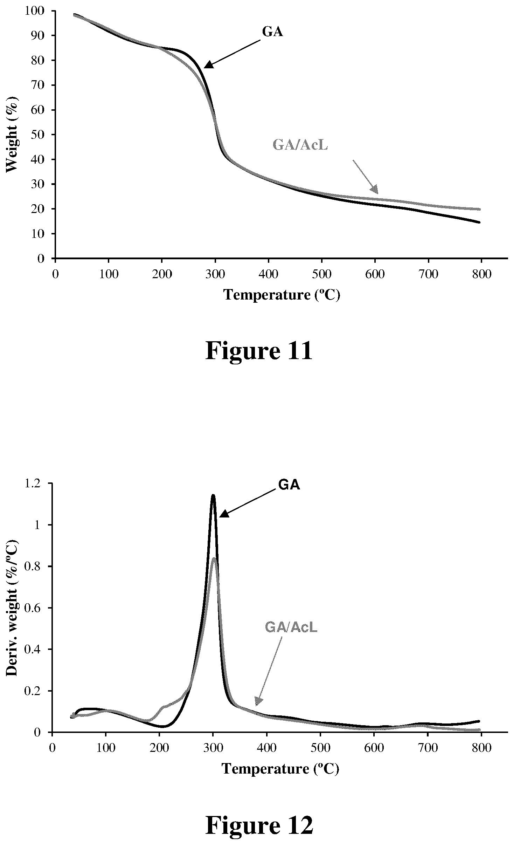

Figures 11 and 12 show the TGA and DTGA curves of the solid GA and GA/AcL adhesives respectively. The addition of AcL increases the thermal stability of GA and, therefore, the temperatures at which 5% ($T_{5\%}$) and 50% ($T_{50\%}$) mass are lost are somewhat higher in GA/AcL (Table 3).

| Table 3. Temperature values at which 5% ($T_{5\%}$) and 50% ($T_{50\%}$) mass are lost in the solid GA and GA/AcL adhesives. TGA experiments. | | |
| --- | --- | --- |
| Adhesive | $T_{5\%}$ (°C) | $T_{50\%}$ (°C) |
| GA | 70 | 304 |
| GA/AcL | 74 | 306 |

| Table 4. Temperature and weight loss values of the thermal decompositions of the solid GA and GA/AcL adhesives. DTGA experiments. | | | | |
| --- | --- | --- | --- | --- |
| | GA | | GA/AcL | |
| | Loss weight (%) | T (°C) | Loss weight (%) | T (°C) |
| 1st decomposition | 15 | 81 | 14 | 104 |
| 2nd decomposition | - | - | 5 | 206 |
| 3rd decomposition | - | - | 5 | 252 |
| 4th decomposition | 53 | 300 | 38 | 302 |
| 5th decomposition | - | - | 6 | 366 |
| 6th decomposition | 8 | 445 | 8 | 467 |
| 7th decomposition | 10 | 689 | 4 | 689 |
| | Residue : 14 wt.% | | Residue : 20 wt.% | |

The addition of AcL produces new thermal decompositions at 206, 252 and 366 °C in the adhesive (Figure 12, Table 4). Furthermore, the decomposition temperature at 445 °C in GA increases up to 467 °C, and the mass loss at 689 °C in GA decreases notably by adding AcL. Consequently, the addition of AcL generates structural changes in the Arabic gum adhesive.

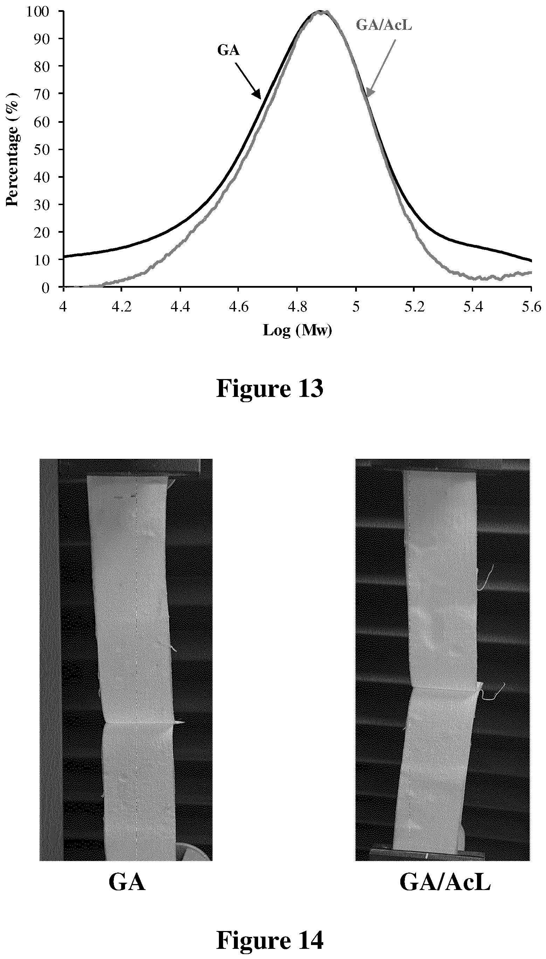

Figure 13 shows the molecular weight distribution curves of the solid GA and GA/AcL adhesives. The solid GA/AcL adhesive exhibits a narrower molecular weight distribution curve than GA, adhesive, indicating lower polydispersity; furthermore, the values of $M_w$ of the solid GA and GA/AcL adhesives are quite similar, but the values of $M_n$ and $M_z$ differ.

Table 5 shows the average in number ($M_n$), average in weight ($M_w$) and average zeta ($M_z$) molecular weights, as well as the polydispersity index (PDI = $M_w/M_n$) and the $M_z/M_w$ ratio of the solid GA and GA/AcL adhesives. The addition of AcL does not change the value of $M_w$, but markedly increases the value of $M_n$ and decreases that of $M_z$. Therefore, the addition of AcL produces a greater number of shorter chains, indicating a hydrolysis of the Arabic gum chains, which agrees with the TGA experiments. Consequently, the PDI and the $M_z/M_w$ ratio values of the Arabic gum adhesive decrease by adding lactic acid.

**Table 5**. Average molecular weights of the solid GA and GA/AcL adhesives.

| Adhesive | $M_n$ (Da) | $M_w$ (Da) | $M_Z$ (Da) | PDI | $M_Z/M_w$ |
|---|---|---|---|---|---|
| GA | 8265 | 21545 | 33782 | 2.61 | 1.57 |
| GA/AcL | 15985 | 21630 | 28471 | 1.35 | 1.32 |

Table 6 shows the T-peel strength of textile material/adhesive/textile material joints. The addition of AcL decreases the intrinsic adhesion capacity of the GA adhesive. Always a cohesive failure of the adhesive (C) is produced (Figure 14).

**Table 6.** Adhesive thickness, T-peel strength and loci of failure of the joints made with textile material and the GA and GA/AcL adhesives.

| Adhesive | Adhesive thickness (g/m$^2$) | T-peel strength (N/m) | Locus of failure |
|---|---|---|---|
| GA | 226 | 25 ± 9 | C |
| GA/AcL | 219 | 13 ± 4 | C |

The dust emission of the impregnated corn seeds with the Arabic gum adhesives was measured by means of the Heubach test. Table 7 shows that the dust emission in impregnated corn seeds with Resid HC - clay-embedded *Glomus iranicum var. tenuihypharum* var. nov - is reduced when the adhesive contains lactic acid.

**Table 7**. Mean values of dust emission - Heubach test - of corn seeds impregnated with Resid HC - clay-embedded *Glomus iranicum var. tenuihypharum* var. nov - by using the GA and GA/AcL adhesives.

| Adhesive | Dust emission (g/100 kg corn seeds) |
|---|---|
| GA | 16.0 ± 0.8 |
| GA/AcL | 13.1 ± 0.4 |

## 5. Conclusions

- The addition of lactic acid (GA/AcL adhesive) increases the durability of the liquid adhesives, because it remains unchanged and without microbial growth after 98 days of its preparation. The adhesive without AcL (GA) shows microbial growth after 63 days of preparation.
- The addition of lactic acid changes the structure of the Arabic gum because the hydrolysis of the polymeric chains, resulting in more chains with lower molecular weights.
- The addition of lactic acid decreases the intrinsic adhesion of the GA adhesive. The overall adhesion capacity of the adhesive including lactic acid remains acceptable
- The addition of lactic acid decreases the dust emission of the GA adhesive.

Example 2 - Improved adhesion and impregnation ability of corn seeds with clay-embedded *Glomus iranicum var. tenuihypharum* var. nov by using Arabic gum adhesives containing dimethylsulfoxide (DMSO)

## 1. Raw materials

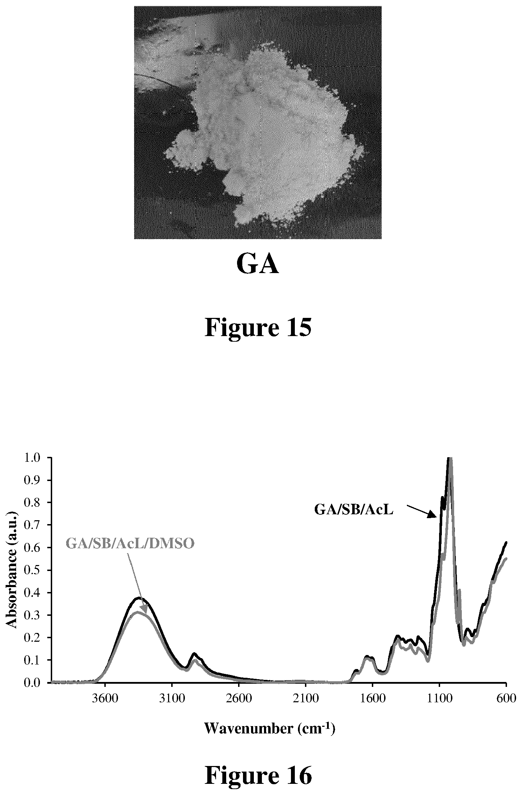

Arabic gum (GA). Two different batches of Arabic gum powder were supplied by GUINAMA S.L.U (bath no. 0090943 - La Pobla de Vallbona, Valencia, Spain) and Pharmur (bath no. 17655601 - Scharlab S.L., Sentmenat, Barcelona, Spain) - Figure 15.

Glycerol (Glv). Ecological glycerol was supplied by Labkem (Villassar de Dalt, Barcelona). Glv has a water content lower than 1 %, density of 1.249 g/cm$^3$, Cl$^-$ content lower than 0.003 % and Pb content lower than 0.0005 %.

Sorbitol (SB). Ecological sorbitol with a purity higher than 98 % was supplied by Sigma-Aldrich (Barcelona, Spain). SB has a melting point of 98-100 °C.

Lactic acid (AcL). Ecological lactic acid Pharma grade with 90.8 wt.% purity and less than 95 % S-enantiomer was supplied by Panreac (Barcelona, Spain).

Dimethylsulfoxide (DMSO). DMSO with purity of 99.99 % - analytical grade - was supplied by Carlo Erba Reagents (Sabadell, Barcelona, Spain).

**2. Used natural gum-based adhesives**

Adhesives made with sorbitol

- Adhesive made with Arabic gum, sorbitol and lactic acid - GA/SB/AcL.

- Adhesive made with Arabic gum, sorbitol, lactic acid and DMSO - GA/SB/AcL/DMSO.

- Adhesive made with Arabic gum, sorbitol, lactic acid and DMSO (dose 1) GA/SB/1DMSO.

- Adhesive made with Arabic gum, sorbitol, lactic acid and DMSO (dose 2) GA/SB/2DMSO.

- Adhesive made with Arabic gum, sorbitol, lactic acid and DMSO (dose 3) - GA/SB/3DMSO.

Tables 8 and 9 show the composition by weight (percentage) of the Arabic gum-based adhesives without and with DMSO and with different amounts of DMSO.

**Table 8.** Nomenclature and composition in percentage by weight of the Arabic gum adhesives without and with DMSO.

| Adhesive | GA (%) | SB (%) | AcL (%) | DMSO (%) | H$_2$O (%) |
|---|---|---|---|---|---|
| GA/SB/AcL | 15-35 | 8-12 | 0.1-5 | - | add to complete 100% |
| GA/SB/AcL/DMSO | 15-35 | 8-12 | 0.1-5 | 5-35 | add to complete 100% |

**Table 9.** Nomenclature and composition in percentage by weight of the Arabic gum adhesives with different amounts of DMSO.

| Adhesive | GA (%) | SB (%) | AcL (%) | DMSO (%) | H$_2$O (%) |
|---|---|---|---|---|---|
| GA/SB/1DMSO | 15-35 | 8-12 | - | 10-25 | add to complete 100% |
| GA/SB/2DMSO | 15-35 | 8-12 | - | 25-35 | add to complete 100% |
| GA/SB/3DMSO | 15-35 | 8-12 | 0 | 35-50 | add to complete 100% |

Adhesives made with glycerol

- Adhesive made with Arabic gum, glycerol (dose 1) and lactic acid (dose 1) - GA/1Glv/1AcL.

- Adhesive made with Arabic gum, glycerol (dose 1), lactic acid (dose 1) and DMSO - GA/1Glv/1AcL/DMSO.

- Adhesive made with Arabic gum, glycerol (dose 2) and lactic acid (dose 2) - GA/2Glv/2AcL.

- Adhesive made with Arabic gum, glycerol (dose 2), lactic acid (dose 2) and DMSO - GA/2Glv/2AcL/DMSO.

Table 10 shows the composition by weight (percentage) of the Arabic gum-based adhesives with different contents of glycerol and lactic acid, without and with DMSO.

**Table 10.** Nomenclature and composition in percentage by weight of the Arabic gum adhesives with different contents of glycerol and lactic acid, without and with DMSO.

| Adhesive | GA (%) | Glv (%) | AcL (%) | DMSO (%) | $H_2O$ (%) |
|---|---|---|---|---|---|
| GA/1Glv/1AcL | 15-35 | 0.1-3 | 2-8 | - | add to complete 100% |
| GA/1Glv/1AcL/ DMSO | 15-35 | 0.1-3 | 2-8 | 5-35 | add to complete 100% |
| GA/2Glv/2AcL | 15-35 | 4-10 | 0.1-2 | - | add to complete 100% |
| GA/2Glv/2AcL/ DMSO | 15-35 | 4-10 | 0.1-2 | 5-35 | add to complete 100% |

### 3. Experimental techniques

*pH measurement.* The pH values of the Arabic gum adhesives were measured at 25 °C in a pH-meter XS PC510 (Eutech Instruments Pte. Ltd, Landsmeer, Netherlands), using Ag/AgCl reference electrode (Metria model PHEL-GB 1-001). Before measurement, the pHmeter was calibrated by using two standard buffer solutions of pH 4.0 and 7.0. Three measurements were carried out and averaged.

*Brookfield viscosity.* The Brookfield viscosities of the Arabic gum adhesives were measured at room temperature according to ASTM D3236-88 standard in a Brookfield RD DV-I Prime viscometer (Brookfield Engineering Laboratories Inc., Stoughton, EEUU). The shear rate was varied from 0.1 to 22 $s^{-1}$ and S-61 spindle were used. 120 mL adhesive were placed into 150 mL closed container (to avoid water evaporation) and the spindle was inserted, starting the measurement from lower to higher shear rates until the viscometer went off scale. Three measurements were carried out and averaged.

*Surface tension.* The surface tensions at room temperature of the Arabic gum adhesives were measured in a Phywe tensiometer (Phywe System Gmgh, Gottingen, Germany) equipped with a 19.5 mm diameter metal ring. The DuNouy ring method was used. The ring was placed in contact with the surface of the adhesive solutions placed in a Petri dish (10 cm diameter x 1 cm depth), measuring the force necessary to separate it. The surface tension ($\gamma$) was calculated by using equation (2).

$$\gamma = \frac{F}{4\pi r} \qquad Equation\ (2)$$

where F is the force required to remove the ring from the liquid adhesive surface and r is the radius of the ring. Three measurements were carried out and averaged.

**Infrared spectroscopy in attenuated total reflectance mode (ATR-IR spectroscopy).** ATR-IR spectroscopy was used to characterize the chemical composition of the solid Arabic gum adhesives. The ATR-IR spectra were obtained in an Alpha spectrometer (Bruker Optik GmbH, Ettlinger, Germany) using a germanium prism and an incident angle of IR beam of 45°. 50 scans were performed with a resolution of 4 $cm^{-1}$. To compare the ATR-IR spectra, they were normalized to the most intense band (C-O-C stretching band at about 1100 $cm^{-1}$).

**Thermal Gravimetric Analysis (TGA).** The thermal degradation and the structure of the solid Arabic gum adhesives were assessed in a TGA Q500 equipment (TA Instruments, New Castle, DE, USA) under nitrogen atmosphere (flow : 50 mL/min). 5-10 mg sample were placed in a platinum crucible and heated from 25 °C to 800 °C by using a heating rate of 10 °C/min.

*T-peel test.* The intrinsic adhesion of the Arabic gum adhesives was evaluated by T-peel test of 100 % cotton textile material/adhesive/100 % cotton textile material joints; the dimensions of the textile material test samples were 15 cm long and 3 cm width (Figure 2).

For making the adhesive joints, the adhesive was applied with a round tin end brush no. 20 on each test piece over a length of 12 cm (Figure 2), the specimens were allowed to dry for 1 hour. Then, a second layer of liquid adhesive was applied on both test specimens and they were placed in contact, and a 2 kg rubber roller was passed 5 times over the joint without exerting pressure. The joint was left to dry for 72 hours, weighed (for determining the adhesive thickness), and tested in a Zwick/Roell Z005 universal testing machine (San Cugat del Vallés, Spain), a cross-head speed of 10 mm/min was used.

During the adhesion test, a curve of force versus displacement is obtained (Figure 3). The value of the adhesion force was taken as the average between 25 and 100 mm of displacement (the double arrow in Figure 3), using the central values to minimize errors. T-peel strength values were expressed as N/m and were calculated as the ratio of the average force to the peeled adhesive front (0.03 m).

The adhesion of the textile material/adhesive/textile material joints was expressed by the T-peel strength value and the locus of failure.

There are three main kind of loci of failure in the adhesive joints: adhesion failure (A), cohesive failure of the adhesive (C), and cohesive failure of the substrate (S).

- Adhesion failure (A): The adhesive separates from one of the substrates (separation at the substrate-adhesive interface).
- Cohesive failure of the adhesive (C): The rupture is produced within the adhesive layer. This failure is obtained when the cohesion of the adhesive is lower than the one of the substrate and the adhesion between the adhesive and the substrate surface.
- Cohesive failure of the substrate (S): The substrate is broken during the adhesion test. This failure is obtained when the cohesion of the substrate is lower than the one of the adhesive and the adhesion between the adhesive and the substrate surface.

*Procedure of impregnation of the corn seeds with Arabic gum adhesives*. The impregnation of corn seeds with Resid HC - clay-embedded *Glomus iranicum var. tenuihypharum* var. nov - (Symborg SL, Murcia, Spain) by using the Arabic gum adhesives was carried out in a SATEC CONCEPT ML 2000 equipment (Satec Equipment GmBh, Elmshorn, Germany) with a capacity of 0.5-2.5 dm$^3$ (Figure 4). 400 g corn seeds were placed into the laboratory coater, the equipment was turned on at maximum power and the adhesive and the clay-embedded *Glomus iranicum var. tenuihypharum* var. nov was added alternately and continuously, little by little, in several cycles, the final addition was made with the remaining adhesive.

*Heubach test* (Figure 5). The Heubach test was carried out in a Dustmeter equipment (Heubach DUSTMETER Gmbh, Salzburg, Austria). The equipment consists of a control unit that allows entering the test parameters, a rotating drum with steel blades, a glass bottle and a container with a fiberglass filter (Whatman GF 92 or Macherey Nagel Type MN 85/70 BF or equivalent specification).

The parameters used to carry out the Heubach test of the clay impregnated corn seeds were as follow: Rotation speed: 30 rpm; air flow: 20 L/min; test time: 120 seconds.

To carry out the test, 100 g impregnated and dry seeds were placed into the rotating drum, the equipment was assembled and the test started. The values obtained were expressed in g clay powder/100 kg impregnated seeds, calculated according to equation (1).

$$dust\ emission\left(\frac{g}{100\ kg\ seeds}\right) = \frac{(m_f - m_i)x10^5}{m_{seeds}}$$
Equation (1)

where $m_f$ is the final mass of filter and housing, $m_i$ is the initial mass of filter and housing, and $m_{seeds}$ is the mass of the impregnated seeds (100 g).

For each impregnated seed, 4 replicates were made and averaged.

**4. Results and discussion**

**Arabic gum adhesives with sorbitol and lactic acid, with and without DMSO**

Table 11 shows the properties of the liquid GA/SB/AcL and GA/SB/AcL/DMSO adhesives. The substitution of water by DMSO increases the pH, the surface tension and Brookfield viscosity of the Arabic gum adhesive.

**Table 11.** Properties of the liquid Arabic gum adhesives with sorbitol and lactic acid, with and without DMSO. The Brookfield viscosity has been measured at a shear rate of 22 $s^{-1}$.

| Adhesive | pH | Brookfield viscosity (mPa.s) | ϒ (mN/m) |
|---|---|---|---|
| GA/SB/AcL | 3.2 | 43 | 40 |
| GA/SB/AcL/DMSO | 4.5 | 205 | 65 |

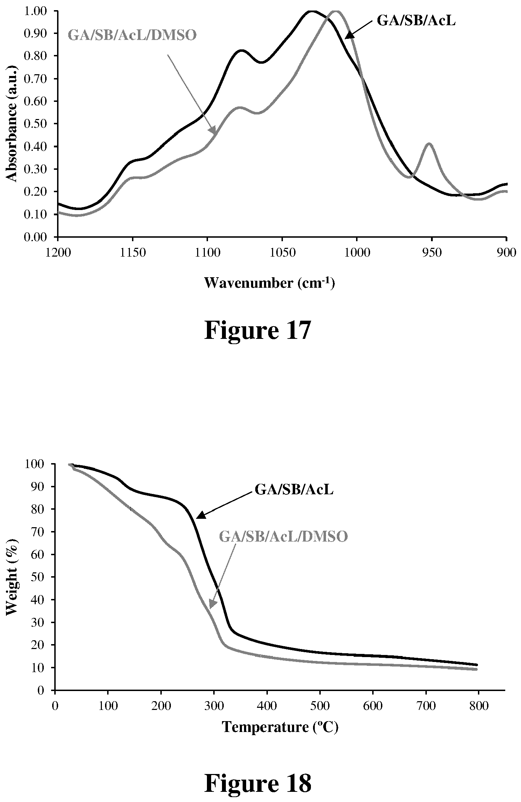

Figure 16 shows the ATR-IR spectra of the solid GA/SB/AcL and GA/SB/AcL/DMSO adhesives, and the assignment of the main absorption bands is given in Table 12. The ATR-IR spectra show the same absorption bands, except the S=O stretching band at 952 $cm^{-1}$ due to DMSO in the solid GA/SB/AcL/DMSO adhesive. Furthermore, there are differences in the intensities and wavenumbers of the C-O-C band region (1014-1148 $cm^{-1}$). Thus, the wavenumber of the C-O-C stretching band at 1030 $cm^{-1}$ in the solid GA/SB/AcL adhesive displaces to 1015 $cm^{-1}$ in the solid GA/SB/AcL/DMSO adhesive. Furthermore, the intensity of the C-O-C band at 1077 $cm^{-1}$ is significantly lower in the adhesive containing DMSO (Figure 17), this is confirmed by the ratio of the intensities of the C-O-C bands at 1015-1030 $cm^{-1}$ with respect to the one at 1077 $cm^{-1}$ (Table 13). Therefore, the addition of DMSO changes the structure of the Arabic gum adhesive.

**Table12.** Assignment of the main absorption bands of the ATR-IR spectra of the solid GA/SB/AcL and GA/SB/AcL/ DMSO adhesives.

| Wavenumber ($cm^{-1}$) | Assignment |
|---|---|
| 3348-3357 | O-H stretching |
| 2873-2881, 2924-2933 | C-H stretching |
| 1730-1732 | C=O stretching |
| 1596-1601, 1638-1642 | C=C stretching |
| 1408-1412 | O-H bending |
| 1306-1319 | C-O-C stretching |
| 1259-1260 | C-O-C stretching in ring |
| 1015-1030, 1077, 1147-1148 | C-O-C stretching |
| 952 | S=O stretching |
| 889-894 | O-H out of plane bending |

**Table 13.** Ratio of the intensities of the C-O-C bands at 1015-1030 and 1077 $cm^{-1}$ in the ATR-IR spectra of the solid GA/SB/AcL and GA/Glv/AcL/DMSO adhesives.

| Adhesive | Band wavenumber ($cm^{-1}$) | $I_{C-O-C\ 1015-1030}/I_{C-O-C\ 1077}$ |
|---|---|---|
| GA/SB/AcL | 1030/1077 | 1.2 |
| GA/SB/AcL/DMSO | 1015/1077 | 1.8 |

Figure 18 shows the TGA curves of the solid GA/SB/AcL and GA/SB/AcL/DMSO adhesives. The substitution of water by DMSO decreases the thermal stability of the Arabic gum adhesive, this decrease agrees with the decrease of the temperatures at which 5 % ($T_{5\%}$) and 50 % ($T_{50\%}$) mass is lost in the GA/SB/AcL/DMSO adhesive (Figure 18; Table 14). The decrease in the $T_{5\%}$ and $T_{50\%}$ values indicate a structural change in the Arabic gum adhesive which can be better analyzed in the derivative of the TGA curves (DTGA).

**Table 14.** Temperatures at which 5 % ($T_{5\%}$) and 50 % ($T_{50\%}$) mass is lost in the solid GA/SB/AcL and GA/SB/AcL/DMSO adhesives. TGA experiment.

| Adhesive | $T_{5\%}$ (°C) | $T_{50\%}$ (°C) |
|---|---|---|
| GA/SB/AcL | 105 | 298 |
| GA/SB/AcL/DMSO | 62 | 258 |

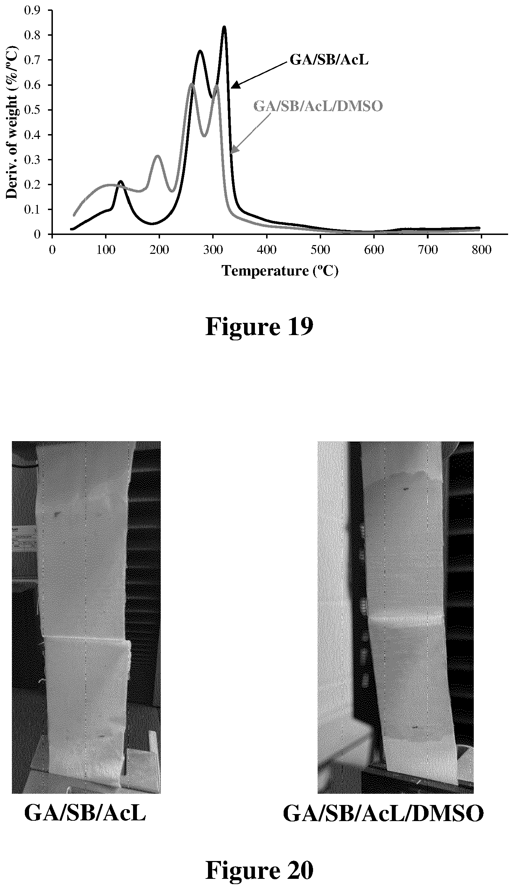

Figure 19 shows the DTGA curves of the solid GA/SB/AcL and GA/SB/AcL/DMSO adhesives and they are different. The DTGA curves of both adhesives shows 5 thermal decompositions and the one of the GA/SB/AcL/DMSO adhesive shows one additional decomposition at 197 °C due to DMSO (Table 15). The thermal decomposition at 107-128 °C may correspond to the gel fraction of the Arabic gum, the ones at 261-275 °C may correspond to sorbitol, the one at 306-321 °C corresponds to the decomposition of the Arabic gum, the one at 457-458 °C corresponds to by-products produced during the TGA experiment, and the one at 654-716 °C corresponds to inorganic moieties.

The adhesive containing DMSO shows lower decomposition temperatures and lower weight losses of the Arabic gum adhesive, this is an indication of a structural change.

**Table 15.** Temperature and weight loss values of the thermal decompositions of the solid GA/SB/AcL and GA/SB/AcL/DMSO adhesives. DTGA experiments.

| | GA/SB/AcL | | GA/SB/AcL/DMSO | |
|---|---|---|---|---|
| | Weight loss (%) | T (°C) | Weight loss (%) | T (°C) |
| 1st decomposition | 14 | 128 | 23 | 107 |
| 2nd decomposition | - | - | 15 | 197 |
| 3rd decomposition | 36 | 275 | 26 | 261 |
| 4th decomposition | 30 | 321 | 22 | 306 |
| 5th decomposition | 5 | 457 | 3 | 458 |
| 6th decomposition | 4 | 654 | 2 | 716 |
| | Residue : 11 wt.% | | Residue : 9 wt.% | |

Table 16 shows the T-peel strength obtained for the textile material/adhesive/textile material joints made with GA/SB/AcL and GA/SB/AcL/DMSO adhesives. The substitution of water by DMSO increases the adhesive capacity of the Arabic gum adhesive and always a cohesive failure of the adhesive (C) is obtained (Figure 20).

**Table 16.** Adhesive thickness, T-peel strength and loci of failure of the textile material/adhesive/textile material joints made with the GA/SB/AcL and GA/SB/AcL/DMSO adhesives.

| Adhesive | Adhesive thickness ($g/m^2$) | T-peel strength (N/m) | Locus of failure |
|---|---|---|---|
| GA/SB/AcL | 230 | 50 ± 0 | C |
| GA/SB/AcL/DMSO | 255 | 76 ± 25 | C |

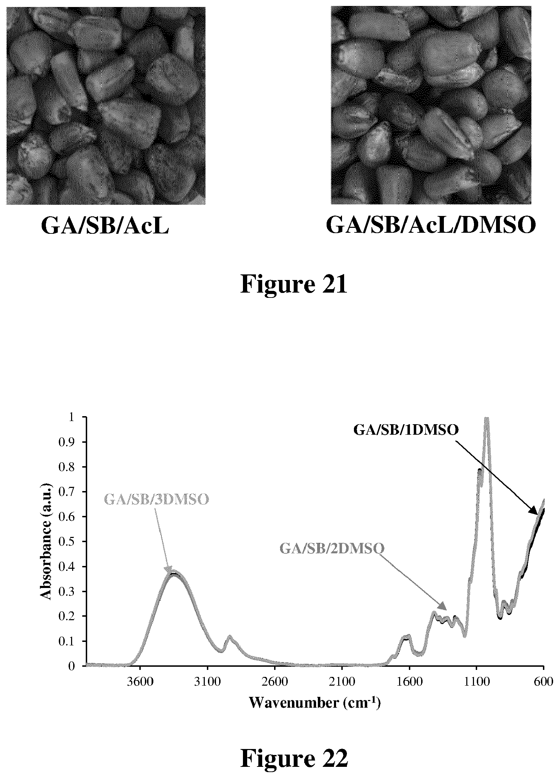

Figure 21 shows the appearance of the clay-embedded *Glomus iranicum* var. *tenuihypharum* var. nov impregnated corn seeds made with GA/SB/AcL and GA/SB/AcL/DMSO adhesives. The substitution of water by DMSO increases the homogeneity and distribution of the clay-embedded *Glomus iranicum* var. *tenuihypharum* var. nov on the corn seeds.

## Arabic gum adhesives made with sorbitol and different amounts of DMSO

Table 17 shows the properties of the liquid Arabic gum adhesives made with sorbitol and different amounts of DMSO. The increase of the amount of DMSO (by substitution of water by DMSO) increases the pH and Brookfield viscosity, and decreases the surface tension of the Arabic gum adhesives.

**Table 17.** Some properties of the liquid Arabic gum adhesives made with sorbitol and different amounts of DMSO. The Brookfield viscosity was measured at a shear rate of 22 s⁻¹.

| Adhesive | pH | Brookfield viscosity (mPa.s) | ϒ (mN/m) |
|---|---|---|---|
| GA/SB/1DMSO | 5.0 | 132 | 63 |
| GA/SB/2DMSO | 5.2 | 170 | 60 |
| GA/SB/3DMSO | 5.5 | 235 | 41 |

Figure 22 shows the ATR-IR spectra of the solid Arabic gum adhesives made with sorbitol and different amounts of DMSO and the assignment of the main absorption bands is given in Table 18. All ATR-IR spectra show the same absorption bands and intensity, indicating similar chemical composition.

**Table 18.** Assignment of the main absorption bands of the ATR-IR spectra of the solid Arabic gum adhesives made with sorbitol and different amounts of DMSO.

| Wavenumber (cm⁻¹) | Assignment |
|---|---|
| 3348 | O-H stretching |
| 2881, 2932 | C-H stretching |
| 1727 | C=O stretching |
| 1605, 1639 | C=C stretching |
| 1408 | O-H bending |
| 1312, 1369 | C-O-C stretching |
| 1260 | C-O-C stretching in ring |
| 1029, 1077, 1147 | C-O-C stretching |
| 951 | S=O stretching |
| 897 | O-H out of plane bending |

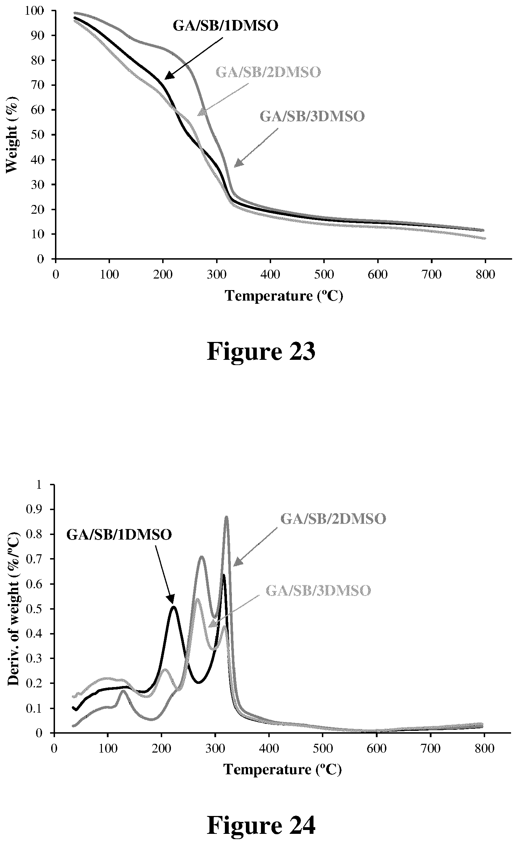

Figure 23 shows the TGA curves of the solid Arabic gum adhesives made with sorbitol and different amounts of DMSO. The increase of the amount of DMSO between 25-35 wt.% with respect to that of water increases the thermal stability of the Arabic gum adhesive, but a decrease is produced when between 35-50 wt.% water is substituted by DMSO. This can be better evidenced by the temperatures at which 5 % ($T_{5\%}$) and 50 % ($T_{50\%}$) mass is lost which are higher in the solid GA/SB/DMSO adhesive (Table 19). The changes in the $T_{5\%}$ and $T_{50\%}$ values indicate a structural change in the Arabic gum adhesive by adding DMSO which depend on the amount added, the structural change can be better analyzed in the derivative of the TGA curves (DTGA).

Figure 24 shows the DTGA curves of the solid Arabic gum adhesives made with sorbitol and different amounts of DMSO. The DTGA curves of all adhesives shows 6 thermal decompositions, except the one of GA/SB/1DMSO which does not show the decomposition at 267-276 °C (Table 20). The thermal decomposition at 94-137 °C may corresponds to the gel fraction of the Arabic gum, the one at 208-223 °C corresponds to DMSO, the one at 267-276 °C may corresponds to the sorbitol, the one at 316-321 °C corresponds to the decomposition of the Arabic gum, the one at 459-464 °C corresponds to by-products produced during the TGA experiment, and the one at 650-674 °C corresponds to inorganic moieties. In general, the increase of the amount of DMSO decreases the decomposition temperatures and the weight losses of the Arabic gum, this is an indication of a structural change caused by interactions between the Arabic gum and DMSO.

**Table 19.** Temperatures at which 5 % ($T_{5\%}$) and 50 % ($T_{50\%}$) mass is lost in the solid Arabic gum adhesives made with sorbitol and different amounts of DMSO. TGA experiments.

| Adhesive | $T_{5\%}$ (°C) | $T_{50\%}$ (°C) |
|---|---|---|
| GA/SB/1DMSO | 56 | 247 |

(continued)

**Table 19.** Temperatures at which 5 % ($T_{5\%}$) and 50 % ($T_{50\%}$) mass is lost in the solid Arabic gum adhesives made with sorbitol and different amounts of DMSO. TGA experiments.

| Adhesive | $T_{5\%}$ (°C) | $T_{50\%}$ (°C) |
|---|---|---|
| GA/SB/2DMSO | 93 | 294 |
| GA/SB/3DMSO | 42 | 260 |

**Table 20.** Temperature and weight loss values of the thermal decompositions of the solid Arabic gum adhesives made with sorbitol and different amounts of DMSO. DTGA experiments.

| | GA/SB/1DMSO | | GA/SB/2DMSO | | GA/SB/3DMSO | |
|---|---|---|---|---|---|---|
| | Weight loss (%) | T (°C) | Weight loss (%) | T (°C) | Weight loss (%) | T (°C) |
| 1st decomposition | 21 | 137 | 14 | 129 | 26 | 94-129 |
| 2nd decomposition | 32 | 223 | 7 | 219 | 13 | 208 |
| 3rd decomposition | - | - | 31 | 276 | 24 | 267 |
| 4th decomposition | 26 | 316 | 28 | 321 | 17 | 317 |
| 5th decomposition | 5 | 459 | 5 | 464 | 4 | 459 |
| 6th decomposition | 3 | 674 | 4 | 653 | 5 | 650 |
| | Residue : 13 wt.% | | Residue : 11 wt.% | | Residue : 11 wt.% | |

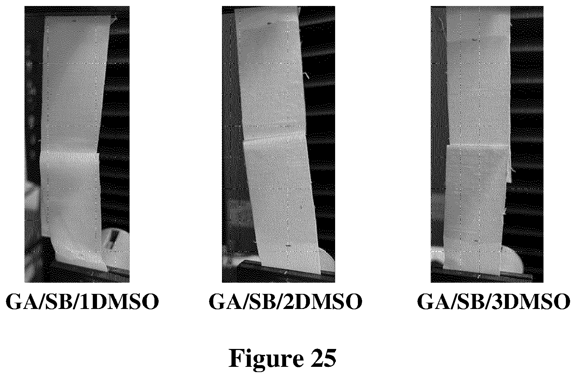

Table 21 shows the T-peel strength values of the textile material/Arabic gum adhesives made with sorbitol and different amounts of DMSO/textile material joints. The increase of the amount of DMSO above 15-30 wt.% decreases the adhesive capacity of the Arabic gum adhesives, always a cohesive failure of the adhesive (C) is produced (Figure 25).

**Table 21.** Adhesive thickness, T-peel strength values and loci of failure of the textile material/Arabic gum adhesives made with sorbitol and different amounts of DMSO/textile material joints.

| Adhesive | Adhesive thickness (g/m$^2$) | T-peel strength (N/m) | Locus of failure |
|---|---|---|---|
| GA/SB/1DMSO | 266 | 108 ± 15 | C |
| GA/SB/2DMSO | 247 | 114 ± 46 | C |
| GA/SB/3DMSO | 229 | 59 ± 2 | C |

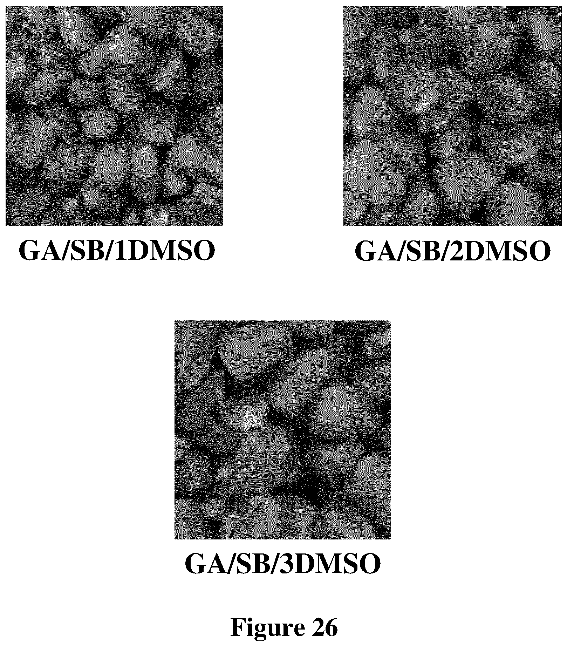

Figure 26 shows the appearance of the clay-embedded *Glomus iranicum* var. *tenuihypharum* var. nov impregnated corn seeds by using the Arabic gum adhesives made with sorbitol and different amounts of DMSO. The impregnations carried out with the GA/SB/2DMSO and GA/SB/3DMSO adhesives are similar and more homogeneous than the one made with the GA/SB/1DMSO adhesive, which shows a higher number of clay-embedded *Glomus iranicum* var. *tenuihypharum* var. nov agglomerates on the surface of the seeds.

**Arabic gum adhesives with different amounts of glycerol and lactic acid, with and without DMSO**

Table 22 shows the properties of the liquid Arabic gum adhesives made with different amounts of glycerol and lactic acid, with and without DMSO. The addition of DMSO increases the pH, and decrease the Brookfield viscosity and the surface tension of the Arabic gum adhesive containing lactic acid and glycerol.

**Table 22.** Properties of liquid Arabic gum adhesives made with different amounts of glycerol and lactic acid, with and without DMSO. The Brookfield viscosity has been measured at a shear rate of 22 s$^{-1}$.

| Adhesive | pH | Brookfield viscosity (mPa.s) | Υ (mN/m) |
|---|---|---|---|
| GA/2Glv/2AcL | 3.8 | 189 | 64 |
| GA/2Glv/2AcL/DMSO | 4.4 | 136 | 60 |
| GA/1Glv/1AcL | 3.2 | 191 | 62 |
| GA/1Glv/1AcL/DMSO | 4.1 | 147 | 59 |

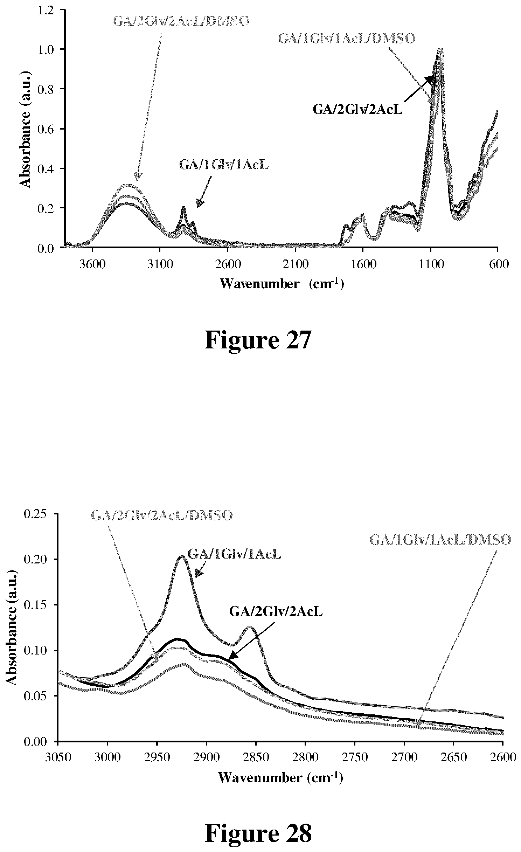

Figure 27 shows ATR-IR spectra of the solid Arabic gum adhesives made with different amounts of glycerol and lactic acid, with and without DMSO and the assignment of the main absorption bands is given in Table 23. The ATR-IR spectra show the same absorption bands, but some of them differ in their intensities. All adhesives containing DMSO shows an additional band at 952 cm$^{-1}$ due to S=O stretching.

**Table 23.** Assignment of the main absorption bands of the ATR-IR spectra of the solid Arabic gum adhesives made with different amounts of glycerol and lactic acid, with and without DMSO.

| Wavenumber (cm$^{-1}$) | Assignment |
|---|---|
| 3350 | O-H stretching |
| 2856-28821, 2922-2929 | C-H stretching |
| 1730 | C=O stretching |
| 1603, 1652 | C=C stretching |
| 1416 | O-H bending |
| 1376 | C-O-C stretching |
| 1260 | C-O-C stretching in ring |
| 976, 1016-1035, 1070 | C-O-C stretching |
| 952 | S=O stretching |
| 897 | O-H out of plane bending |

Figure 28 shows differences in the intensities of the two C-H stretching bands at 2856-2882 and 2922-2929 cm$^{-1}$, the ratio of their intensities decreases in the adhesives containing DMSO, more noticeably in the ATR-IR spectrum of the solid GA/1Glv/1AcL adhesive (Table 24). This may indicate the existence of interactions between the Arabic gum and/or lactic acid with DMSO.

**Table 24.** Ratio of the intensities of the C-H stretching bands at 2856-2882 and 2922-2929 cm$^{-1}$ of the solid Arabic gum adhesives made with different amounts of glycerol and lactic acid, with and without DMSO.

| Adhesive | Band wavenumber (cm$^{-1}$) | $I_{\text{C-H 2856-2882}}/I_{\text{C-H 2922-2929}}$ |
|---|---|---|
| GA/2Glv/2AcL | 2929/2882 | 1.2 |
| GA/2Glv/2AcL/DMSO | 2927/2882 | 1.2 |
| GA/1Glv/1AcL | 2925/2856 | 1.6 |
| GA/1Glv/1AcL/DMSO | 2922/2882 | 1.2 |

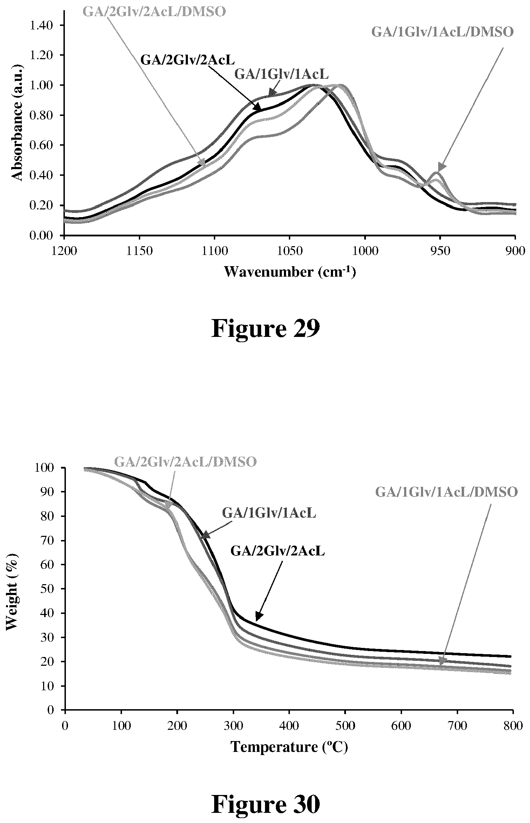

Figure 29 shows differences in the intensities of the two C-O-C stretching bands at 1016-1035 and 1070 cm$^{-1}$, the ratio of the intensities of these bands is higher in the adhesives containing DMSO, more noticeably in the ATR-IR spectrum of the solid GA/1Glv/1AcL adhesive (Table 25). This may indicate the existence of interactions between the Arabic gum, DMSO and AcL.

**Table 25.** Ratio of the intensities of the C-O-C stretching bands at 1016-1035 and 1070 cm$^{-1}$ of the solid Arabic gum adhesives made with different amounts of glycerol and lactic acid, with and without DMSO.

| Adhesive | Band wavenumber (cm$^{-1}$) | $I_{\text{C-O-C 1016-1035}}/I_{\text{C-O-C}}$ 1070 |
|---|---|---|
| **GA/2Glv/2AcL** | 1033/1070 | 1.2 |
| **GA/2Glv/2AcL/DMSO** | 1020/1070 | 1.3 |
| **GA/1Glv/1AcL** | 1035/1070 | 1.1 |
| **GA/1Glv/1AcL/DMSO** | 1016/1070 | 1.5 |

Figure 30 shows the TGA curves of the solid Arabic gum adhesives made with different amounts of glycerol and lactic acid, with and without DMSO, and Table 26 shows the temperatures at which the adhesives lose 5 % ($T_{5\%}$) and 50 % ($T_{50\%}$) mass.

Figure 30 and Table 26 show that the addition of DMSO decreases the thermal stability of the Arabic gum adhesives, irrespective of the glycerol and acid lactic amounts. Similarly, the temperatures of the adhesives at which 5 wt.% and 50 wt.% is lost are lower when they contain DMSO.

**Table 26.** Temperatures at which 5 % ($T_{5\%}$) and 50 % ($T_{50\%}$) mass is lost in the solid Arabic gum adhesives made with different amounts of glycerol and lactic acid, with and without DMSO. TGA experiments.

| Adhesive | $T_{5\%}$ (°C) | $T_{50\%}$ (°C) |
|---|---|---|
| **GA/2Glv/2AcL** | 122 | 284 |
| **GA/2Glv/2AcL/DMSO** | 93 | 258 |
| **GA/1Glv/1AcL** | 130 | 286 |
| **GA/1Glv/1AcL/DMSO** | 92 | 260 |

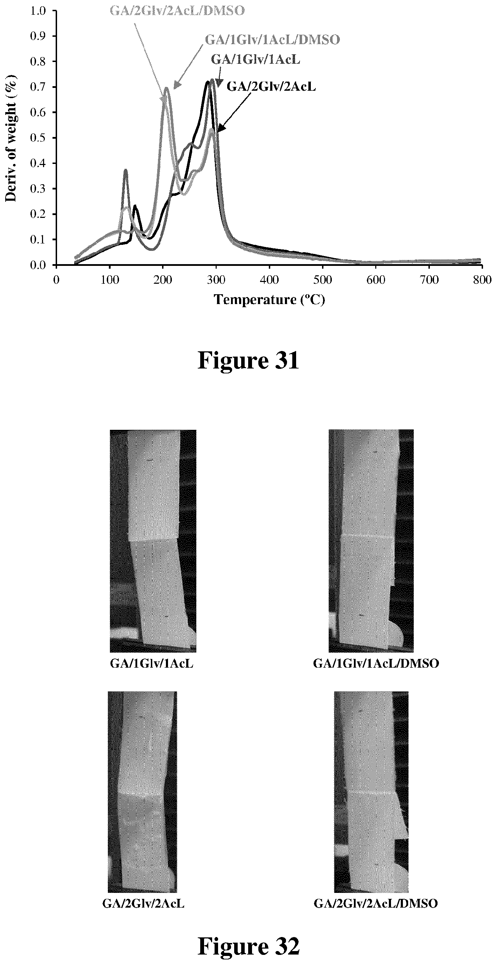

Figure 31 shows the DTGA curves of the solid Arabic gum adhesives made with different amounts of glycerol and lactic acid, with and without DMSO, and Table 27 shows the weight losses and temperatures of the thermal decompositions of the adhesives. The thermal decomposition at 113-149 °C may corresponds to the gel fraction of the Arabic gum, the one at 204-244 °C corresponds to DMSO and glycerol, the ones at 253-261 °C and 284-292 °C correspond to the decomposition of the Arabic gum, the one at 445-482 °C corresponds to by-products produced during the TGA experiment, and the one at 655-686 °C corresponds to inorganic moieties. In general, the increase of the amount of DMSO decreases the decomposition temperatures and the weight losses of the Arabic gum adhesive, the changes are more marked in the adhesives with lower amount of glycerol and higher amount of lactic acid. These trends indicate a structural change caused by interactions between the Arabic gum and/or lactic acid with DMSO.

**Table 27.** Temperature and weight loss values of the thermal decompositions of the solid Arabic gum adhesives made with different amounts of glycerol and lactic acid, with and without DMSO. DTGA experiments.

| | GA/1Glv/1AcL | | GA/2Glv/2AcL/ | | GA/1Glv/1AcL/ DMSO | | GA/2Glv/2AcL/ DMSO | |
|---|---|---|---|---|---|---|---|---|
| | Weight loss (%) | T (°C) | Weight loss (%) | T (°C) | Weight loss (%) | T (°C) | Weight loss (%) | T (°C) |
| 1st decomposition | 11 | 148 | 14 | 130 | 16 | 132 | 10 | 113 |
| 2nd decomposition | - | - | 12 | 228 | - | - | 4 | 149 |
| 3rd decomposition | 11 | 217 | 6 | 244 | 26 | 204 | 30 | 206 |

(continued)

**Table 27.** Temperature and weight loss values of the thermal decompositions of the solid Arabic gum adhesives made with different amounts of glycerol and lactic acid, with and without DMSO. DTGA experiments.

|  | GA/1Glv/1AcL | | GA/2Glv/2AcL/ | | GA/1Glv/1AcL/ DMSO | | GA/2Glv/2AcL/ DMSO | |
|---|---|---|---|---|---|---|---|---|
|  | Weight loss (%) | T (°C) | Weight loss (%) | T (°C) | Weight loss (%) | T (°C) | Weight loss (%) | T (°C) |
| 4th decomposition | 16 | 257 | 9 | 253 | 11 | 261 | 10 | 258 |
| 5th decomposition | 27 | 284 | 29 | 293 | 21 | 291 | 24 | 292 |
| 6th decomposition | 10 | 445 | 10 | 449 | 8 | 482 | 5 | 481 |
| 7th decomposition | 2 | 674 | 3 | 686 | 3 | 655 | 3 | 663 |
|  | Residue: 22 wt. % | | Residue: 18 wt. % | | Residue: 15 wt. % | | Residue: 16 wt. % | |

Table 28 shows the T-peel strength of the textile material/Arabic gum adhesive/textile material joints made with the Arabic gum adhesives containing different amounts of glycerol and lactic acid, with and without DMSO. The addition of DMSO increases the intrinsic adhesion of the Arabic gum adhesives, the adhesion is somewhat higher in the adhesives with higher amount of glycerol and lower amount of lactic acid. Always a cohesive failure of the adhesive (C) is produced (Figure 32).

**Table 28.** Adhesive thickness, T-peel strength and loci of failure of the textile material/adhesive/textile material joints made with the Arabic gum adhesives containing different amounts of glycerol and lactic acid, with and without DMSO.

| Adhesive | Adhesive thickness (g/m$^2$) | T-peel strength (N/m) | Locus of failure |
|---|---|---|---|
| GA/2Glv/2AcL | 196 | 81 ± 1 | C |
| GA/2Glv/2AcL/DMSO | 188 | 168 ± 31 | C |
| GA/1Glv/1AcL | 184 | 112 ± 24 | C |
| GA/1Glv/1AcL/DMSO | 204 | 149 + 21 | C |

The dust emission of the clay-embedded *Glomus iranicum* var. *tenuihypharum* var. nov impregnated corn seeds with the Arabic gum adhesives made with different amounts of glycerol and lactic acid, with and without DMSO, was measured by means of the Heubach test. Table 29 shows a higher dust emission in the Arabic gum adhesives without DMSO, more noticeably in the adhesives containing less amount of glycerol and greater amount of lactic acid, i.e., the lowest dust emission corresponds to the corn seeds impregnated with clay-embedded *Glomus iranicum* var. *tenuihypharum* var. nov and GA/1Glv/1AcL/DMSO adhesive.

**Table 29.** Mean values of dust emission - Heubach test - of corn seeds impregnated with Resid HC - clay-embedded *Glomus iranicum* var. *tenuihypharum* var. nov - by using the Arabic gum adhesives made with different amounts of glycerol and lactic acid, with and without DMSO.

| Adhesive | Dust emission (g/100 kg corn seeds) |
|---|---|
| GA/2Glv/2AcL | 15.0 ± 0.6 |
| GA/2Glv/2AcL/DMSO | 8.8 ± 1.5 |
| GA/1Glv/1AcL | 16.4 ± 1.5 |
| GA/1Glv/1AcL/DMSO | 10.6 ± 0.8 |

**6. Conclusions**

- The addition of lactic acid, glycerol and DMSO in the Arabic gum adhesive changes its structure and properties.
- The addition of DMSO increases the pH, the surface tension and Brookfield viscosity of the Arabic gum adhesive, irrespective of the lactic acid and glycerol contents.
- The addition of DMSO between 15-30 wt% increases the adhesive capacity of the Arabic gum adhesive. The addition of lactic acid and DMSO increases the adhesive capacity of the Arabic gum adhesive.
- The addition of DMSO in the Arabic gum adhesive increases the homogeneity of the corn seeds impregnated with clay-embedded *Glomus iranicum* var. *tenuihypharum* var. nov.
- Even no significant differences in the dust emissions are observed in the clay-embedded *Glomus iranicum* var. *tenuihypharum* var. nov impregnated seeds with the Arabic gum adhesives in which 15-35 wt.% of the water has been replaced by DMSO, unexpectedly, the dust emission of the impregnated corn seeds is reduced.
- The Arabic gum adhesives without DMSO show higher dust emission, more noticeably when they contain less amount of glycerol and greater amount of AcL.

Example 3 - Improved impregnation of corn seeds to clay-embedded *Glomus iranicum* var. *tenuihypharum* var. nov with tragacanth gum adhesives containing surfactin

**1. Raw materials**

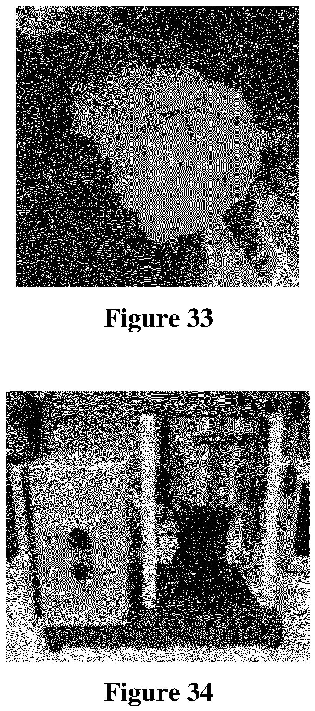

Tragacanth gum (GT). The tragacanth gum powder (batch no. 0088896) was supplied by GUINAMA S.L.U (La Pobla de Vallona, Valencia, Spain) (Figure 33).

Glycerol (Glv). Ecological glycerol was supplied by Labkem (Villassar de Dalt, Barcelona). Glv has water content lower than 1 % and a density of 1.249 g/cm$^3$. Lactic acid (AcL). Ecological lactic acid Pharma grade with 90.8 wt.% purity and less than 95 % S-enantiomer was supplied by Panreac (Barcelona, Spain).

Surfactin (SU). Surfactin is a naturally occurring surfactant. Surfactin was supplied by Kaneka Corporation (Osaka, Japan). It is a white powder, soluble in water and has a pH between 6.5 and 8.

**2. Used natural gum-based adhesives**

- Adhesive made with tragacanth gum - GT.
- Adhesive made with tragacanth gum, glycerol and lactic acid - GT/Glv/AcL.
- Adhesive made with tragacanth gum, glycerol, lactic acid and surfactin - GT/Glv/AcL/SU.

Table 30 show the composition by weight (percentage) of the tragacanth gum-based adhesives with and without an aqueous solution of $3\times10^{-3}$ g/mL surfactin.

**Table 30.** Nomenclature and composition in percentage by weight of the tragacanth gum adhesives with and without an aqueous solution of $3\times10^{-3}$ g/mL surfactin.

| Adhesive | GT (%) | Glv (%) | AcL (%) | SU (%) | H$_2$O (%) |
|---|---|---|---|---|---|
| GT | 0.75-1.5 | - | - | - | add to complete 100% |
| GT/Glv/AcL | 0.75-1.5 | 0.05-0.5 | 0.01-0.5 | - | add to complete 100% |
| GT/Glv/AcL/SU | 0.75-1.5 | 0.05-0.5 | 0.01-0.5 | 0.03-1.5 | add to complete 100% |

**3. Impregnation of corn seeds with clay-embedded *Glomus iranicum* var. *tenuihypharum* var. nov by using tragacanth gum adhesives**

For the impregnation of the corn seeds with clay-embedded *Glomus iranicum* var. *tenuihypharum* var. nov by using the tragacanth gum adhesives, a HR-160 laboratory rotary coater (Hoopman Equipment and Engineering, Aalten, The Netherlands) with a capacity of 0.05-0.5 L was used (Figure 34). 300 g corn seeds were placed into the laboratory coater, the equipment was turned on at maximum power and the adhesive and the clay-embedded *Glomus iranicum* var. *tenuihypharum* var. nov were added alternately and continuously, little by little, in several cycles, the final addition was made with the remaining adhesive. To carry out the impregnation of the corn seeds, 1.5 g clay-embedded *Glomus iranicum* var. *tenuihypharum* var. nov and 0.5 mL adhesive diluted with 1.7 mL water were used.

## 4. Experimental techniques

*pH measurement.* The pH values of the tragacanth gum adhesives were measured at 25 °C in a pH-meter XS PC510 (Eutech Instruments Pte. Ltd, Landsmeer, Netherlands), using Ag/AgCl reference electrode (Metria model PHEL-GB1-001).

Before measurement, the pHmeter was calibrated by using two standard buffer solutions of pH 4.0 and 7.0. Three measurements were carried out and averaged.

*Brookfield viscosity.* The Brookfield viscosities of the tragacanth gum adhesives were measured at room temperature according to ASTM D3236-88 standard in a Brookfield RD DV-I Prime viscometer (Brookfield Engineering Laboratories Inc., Stoughton, EEUU). The shear rate was varied from 0.1 to 22 $s^{-1}$ and S-61 spindle was used. 120 mL adhesive were placed into 150 mL closed container (to avoid water evaporation) and the spindle was inserted, starting the measurement from lower to higher shear rates until the viscometer went off scale. Three measurements were carried out and averaged.

*Surface tension.* The surface tensions at room temperature of the tragacanth gum adhesives were measured in a Phywe tensiometer (Phywe System Gmgh, Gottingen, Germany) equipped with a 19.5 mm diameter metal ring. The DuNouy ring method was used. The ring was placed in contact with the surface of the adhesive solutions placed in a Petri dish (10 cm diameter x 1 cm depth), measuring the force necessary to separate it. The surface tension ($\gamma$) was calculated by using equation (2).

$$\gamma = \frac{F}{4\pi r} \qquad Equation\ (2)$$

where F is the force required to remove the ring from the liquid adhesive surface and r is the radius of the ring. Three measurements were carried out and averaged.

**Infrared spectroscopy in attenuated total reflectance mode (ATR-IR spectroscopy).** ATR-IR spectroscopy was used to characterize the chemical composition of the solid tragacanth gum adhesives. The ATR-IR spectra were obtained in an Alpha spectrometer (Bruker Optik GmbH, Ettlinger, Germany) using a germanium prism. The angle of incidence of the IR beam was 45° and 50 scans were performed with a resolution of 4 $cm^{-1}$. To compare the ATR-IR spectra, they were normalized to the most intense band (C-O-C stretching band at about 1100 $cm^{-1}$).

**Thermal Gravimetric Analysis (TGA).** The thermal degradation and the structure of the solid tragacanth gum adhesives were assessed in a TGA Q500 equipment (TA Instruments, New Castle, DE, USA) under nitrogen atmosphere (flow : 50 mL/min). 5-10 mg sample were placed in a platinum crucible and heated from 25 °C to 800 °C by using a heating rate of 10 °C/min.

*T-peel test.* The intrinsic adhesion of the tragacanth gum adhesives was evaluated by T-peel test of 100 % cotton textile material/adhesive joints; the dimensions of the textile material test samples were 15 cm long and 3 cm width (Figure 2).

For making the adhesive joints, the adhesive was applied with a round tin end brush no. 20 on each test piece over a length of 12 cm (Figure 2), the specimens were allowed to dry for 1 hour. Then, a second layer of liquid adhesive was applied on both test specimens and they were placed in contact, and a 2 kg rubber roller was passed 5 times over the joint without exerting pressure. The joint was left to dry for 72 hours, weighed (for determining the adhesive thickness), and tested in a Zwick/Roell Z005 universal testing machine (San Cugat del Vallés, Spain), a cross-head speed of 10 mm/min was used.

During the adhesion test, a curve of force versus displacement is obtained (Figure 3). The value of the adhesion force was taken as the average between 25 and 100 mm of displacement (double arrow in Figure 3), using the central values to minimize errors. T-peel strength values were expressed as N/m and was obtained by dividing the average force by the peeled adhesive front (0.03 m).

The adhesion of the textile material/adhesive joints is expressed by the T-peel strength value and the locus of failure. There are three main kind of loci of failure in the adhesive joints : adhesion failure (A), cohesive failure of the adhesive (C), and cohesive failure of the substrate (S).

- Adhesion failure (A): The adhesive separates from one of the substrates (separation at the substrate-adhesive interface).
- Cohesive failure of the adhesive (C): The rupture is produced within the adhesive layer. This failure is obtained when the cohesion of the adhesive is lower than the one of the substrate and the adhesion between the adhesive and the substrate surface.
- Cohesive failure of the substrate (S): The substrate is broken during the adhesion test. This failure is obtained when the cohesion of the substrate is lower than the one of the adhesive and the adhesion between the adhesive and the substrate surface.

## 5. Results and discussion

Table 31 shows the properties of the liquid tragacanth gum (GT) adhesives with and without an aqueous solution of surfactin of concentration $3 \times 10^{-3}$ g/mL. The addition of glycerol and lactic acid decreases the Brookfield viscosity and the pH value of the GT adhesive and does not affect its surface tension. The addition of surfactin increases the pH and the Brookfield viscosity of the GT adhesive, and a noticeable decrease of the surface tension is produced, this is an indication of improved wettability.

**Table 31.** Properties of the tragacanth gum adhesives with and without surfactin. The Brookfield viscosity was measured at a shear rate of 21 s$^{-1}$.

| Adhesive | pH | Brookfield viscosity (mPa.s) | $\Upsilon$ (mN/m) |
|---|---|---|---|
| GT | 5.7 | 246 | 60 |
| GT/Glv/AcL | 3.8 | 165 | 62 |
| GT/Glv/AcL/SU | 5.2 | 228 | 37 |

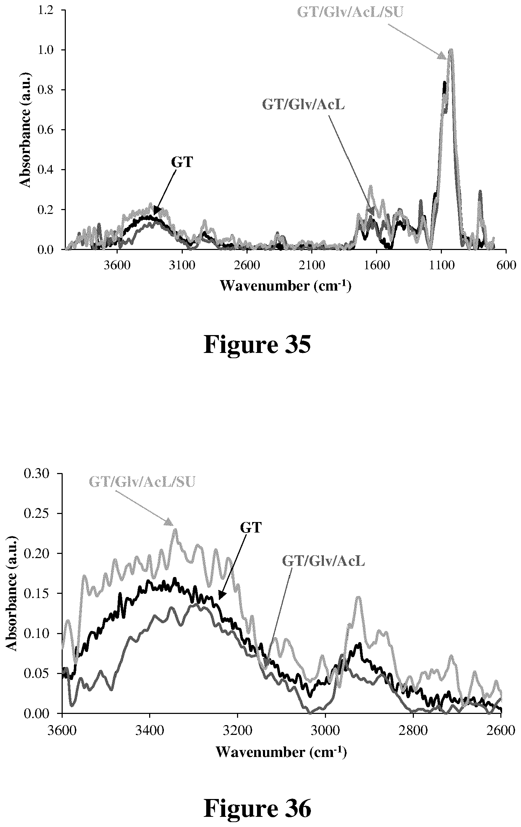

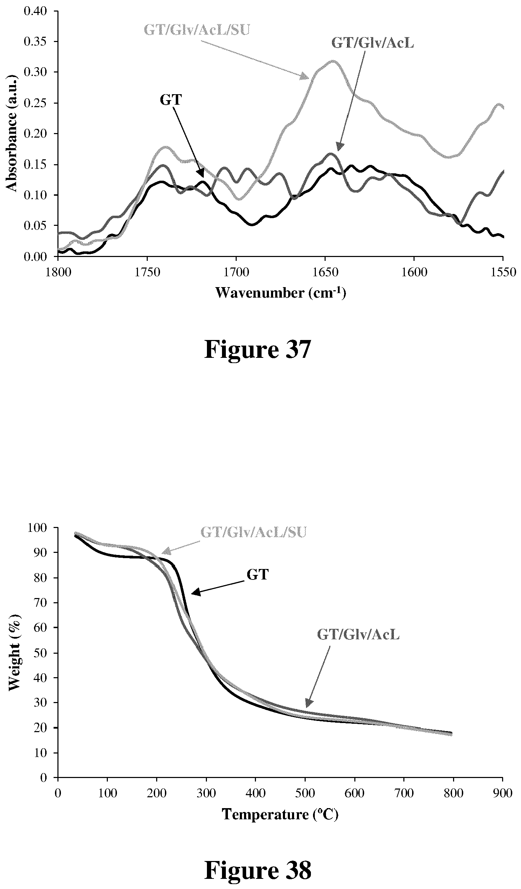

Figure 35 shows the ATR-IR spectra of the tragacanth gum (GT) adhesives and Table 32 shows the assignment of the main absorption bands. The ATR-IR spectra of all adhesives are somewhat similar and no new bands appear by adding Glv, AcL or surfactin. However, there are some differences in the intensities and wavenumbers of different bands in the ATR-IR spectra. Thus, by adding surfactin, the C-H stretching band at 2961 cm$^{-1}$ is displaced to higher wavenumber (2925 cm$^{-1}$) (Figure 36), and the intensity of the C=C stretching band at 1647 cm$^{-1}$ increases (Figure 37). Therefore, the addition of surfactin changes the structure of the GT adhesives.

**Table 32.** Assignment of the main absorption bands in the ATR-IR spectra of the tragacanth gum adhesives.

| Wavenumber (cm$^{-1}$) | Assignment |
|---|---|
| 3349, 3294 | O-H stretching |
| 2961-2925, 2870-2860 | C-H stretching |
| 1741-1740 | C=O stretching |
| 1647-1646, 1614, 1513 | C=C stretching |
| 1260, 1243, 1231 | C-O-C stretching in ring |
| 1425-1417, 1145, 1075, 1029 | C-O-C stretching |

Figure 38 shows the TGA curves of the tragacanth gum adhesives. Table 33 shows the temperatures at which 5 % ($T_{5\%}$) and 50 % ($T_{50\%}$) mass is lost. The addition of Glv, AcL and surfactin increases the thermal stability of the tragacanth gum, in agreement with the increase in the $T_{5\%}$ values (Table 33). Furthermore, the TGA curve of the tragacanth gum adhesive change by adding Glv, AcL and surfactin.

**Table 33.** Temperatures at which 5 % ($T_{5\%}$) and 50 % ($T_{50\%}$) mass is lost for the tragacanth gum adhesives. TGA experiments.

| Adhesive | $T_{5\%}$ (°C) | $T_{50\%}$ (°C) |
|---|---|---|
| GT | 45 | 294 |

(continued)

| Table 33. Temperatures at which 5 % ($T_{5\%}$) and 50 % ($T_{50\%}$) mass is lost for the tragacanth gum adhesives. TGA experiments. | | |
|---|---|---|
| Adhesive | $T_{5\%}$ (°C) | $T_{50\%}$ (°C) |
| GT/Glv/AcL | 64 | 290 |
| GT/Glv/AcL/SU | 68 | 296 |

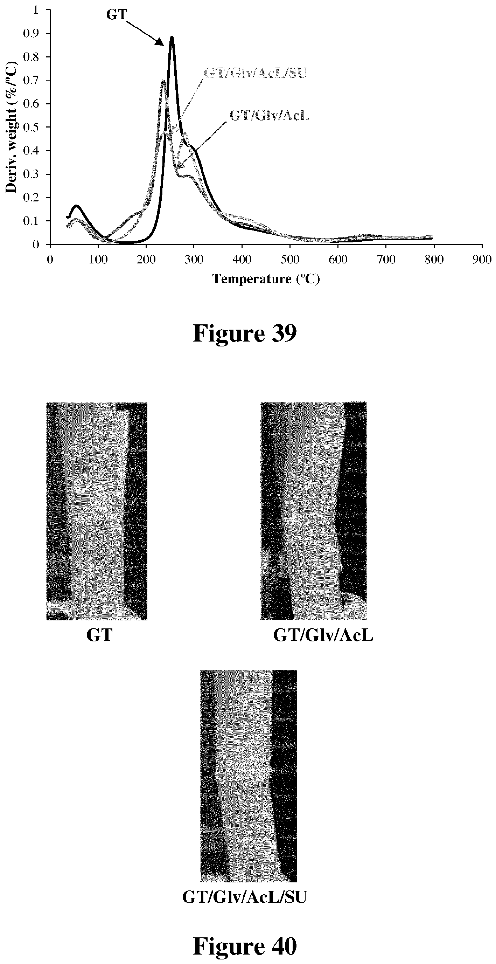

The changes in the structure of the GT adhesives can be better noticed in the derivative of the TGA curves (DTGA curves), because the different thermal decompositions appear as maxima. According to Figure 39 and Table 34, the tragacanth gum adhesives show 5-6 thermal decompositions at different temperatures : 55-59 °C (mass loss = 5-9 wt.%) due to the gel fraction of the tragacanth gum; 168 °C (mass loss = 8 wt.%) - only appears in GT/Glv/AcL adhesive; 237-254 °C (mass loss = 28-33 wt.%) ; 280-300 °C (mass loss = 22-28 wt.%); 414-455 °C (mass loss = 8-13wt.%); and 650-680 °C (mass loss = 4-7 wt.%). In general, the addition of Glv, AcL and surfactin decreases the temperatures of the thermal descompositions of the tragacanth gum adhesive. The addition of Glv, AcL and surfactin decreases the weight losses of the thermal decompositions at 55 °C, 254 °C and 300 °C, and increases the weight losses of the thermal decompositions at 455 °C and 680 °C of the tragacanth gum adhesive. These differences indicate structural differences between the adhesives.

| Table 34. Temperature and weight loss values of the thermal decompositions of the tragacanth gum adhesives. DTGA experiments. | | | | | | |
|---|---|---|---|---|---|---|
| | GT | | GT/Glv/AcL | | GT/Glv/AcL/SU | |
| | Weight loss (%) | T (°C) | Weight loss (%) | T (°C) | Weight loss (%) | T (°C) |
| 1st decomposition | 9 | 55 | 5 | 57 | 5 | 59 |
| 2nd decomposition | - | - | 8 | 168 | - | - |
| 3rd decomposition | 33 | 254 | 29 | 237 | 28 | 240 |
| 4th decomposition | 26 | 300 | 22 | 289 | 28 | 280 |
| 5th decomposition | 8 | 455 | 10 | 414 | 13 | 418 |
| 6th decomposition | 4 | 680 | 7 | 655 | 6 | 650 |
| | Residue = 18 wt.% | | Residue = 19 wt.% | | Residue = 20 wt.% | |

Table 35 shows the T-peel strength values of textile material/tragacanth gum adhesive/textile material joints. The adhesive thickness in the joints is very similar (56-69 g/m$^2$). The addition of Glv, AcL and surfactin decreases the T-peel strength value, particularly by adding surfactin. Furthermore, the locus of failure is adhesion (A) in the joint made with GT, mixed failure of adhesion and cohesive failure of the adhesive (A/C) in the joint made with GT/Glv/AcL, and cohesive failure of the adhesive (C) in the joint made with GT/Glv/AcL/SU (Figure 40).

| Table 35. Adhesive thickness, T-peel strength values and loci of failure of textile material/tragacanth gum adhesive/ textile material joints. | | | |
|---|---|---|---|
| Adhesive | Adhesive thickness (g/m$^2$) | T-peel strength (N/m) | Locus of failure |
| GT | 69 | 228 ± 27 | A |
| GT/Glv/AcL | 60 | 148 ± 41 | A/C |
| GT/Glv/AcL/SU | 56 | 40 ± 6 | C |

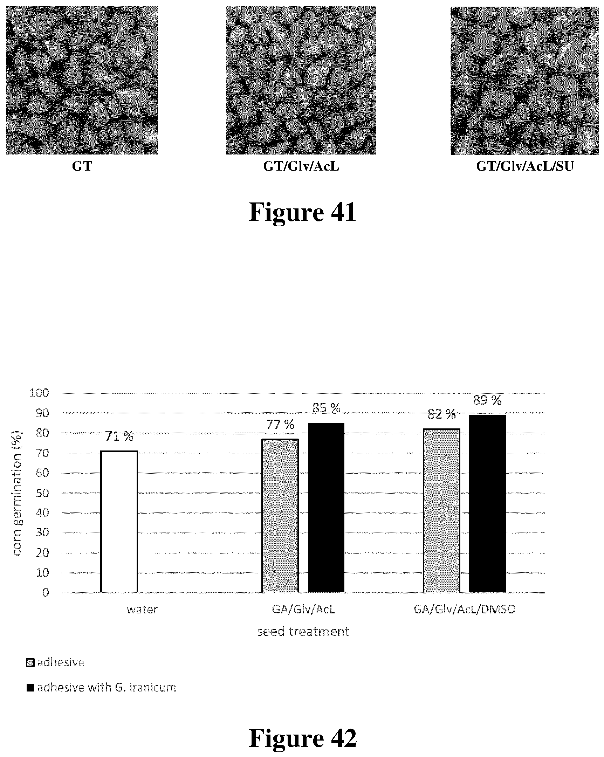

Figure 41 shows the appearance of the corn seeds impregnated with clay-embedded *Glomus iranicum* var. *tenuihypharum* var. nov by using tragacanth gum adhesives. The clay-embedded *Glomus iranicum* var. *tenuihypharum* var. nov impregnated corn seeds with GT(0088896) adhesive show important agglomerations of clay on the surface. However, the seeds impregnated with the adhesives containing Glv, AcL, and, mainly, surfactin show less clay agglomeration on the surface. Therefore, although the intrinsic adhesion of the tragacanth gum adhesive decreases noticeably by adding surfactin, the improved surface tension is the dominant factor in the improved impregnation of the corn seeds with clay-embedded *Glomus iranicum* var. *tenuihypharum* var. nov.

### 6. Conclusions

- The addition of Glv and AcL decreases the pH and Brookfield viscosity of the tragacanth gum adhesive.
- The addition of surfactin increases the pH and Broofield viscosity, and decrease noticeably the surface tension of the tragacanth gum adhesive.
- The addition of Glv, AcL and surfactin produces chemical changes of the tragacanth gum adhesive (change in the wavenumbers of the C-H stretching and C=C stretching bands). Furthermore, the addition of Glv, AcL and surfactin increases the thermal stability of the tragacanth gum adhesive and changes differently its structure.
- The addition of Glv and AcL decreases the T-peel strength value and changes the loci of failure (from adhesion failure to mixed failure of adhesion and cohesive failure of the adhesive) of the textile material/tragacanth gum adhesive/textile material joints. However, the overall adhesion capacity of the adhesives including Glv and AcL remains acceptable
- The addition of surfactin decreases noticeably the T-peel strength value of the textile material/tragacanth gum adhesive/textile material joints and the locus of failure changes from adhesion failure to cohesive failure of the adhesive. However, the overall adhesion capacity of the adhesives including surfactin remains acceptable
- The corn seeds impregnated with clay-embedded *Glomus iranicum* var. *tenuihypharum* var. nov by using the tragacanth gum adhesive containing surfactin show less agglomeration of clay on the surface than when the tragacanth gum adhesive without surfactin is used. Therefore, the improved surface tension is dominant with respect to the intrinsic adhesion in the improved impregnation of corn seeds with clay-embedded *Glomus iranicum* var. *tenuihypharum* var. nov by using the tragacanth gum adhesive containing surfactin.

Example 4 - Germination of corn seeds impregnated with clay-embedded *Glomus iranicum* var. *tenuihypharum* var. nov by using Arabic gum adhesives

### 1. Raw materials

Arabic gum (GA). Two different batches of Arabic gum powder were supplied by GUINAMA S.L.U (bath no. 0090943 - La Pobla de Vallbona, Valencia, Spain) and Pharmur (bath no. 17655601 - Scharlab S.L., Sentmenat, Barcelona, Spain) - Figure 15.
Different additives were added to the Arabic gum for obtaining different adhesives.

- Glycerol (Glv). Ecological glycerol was supplied by Labkem (Villassar de Dalt, Barcelona). Glv has a water content lower than 1 % and a density of 1.249 g/cm$^3$.
- Lactic acid (AcL). Ecological lactic acid Pharma grade with 90.8 wt.% purity and less than 95 % S-enantiomer was supplied by Panreac (Barcelona, Spain).
- Dimethylsulfoxide (DMSO). DMSO with purity of 99.99 % - analytical grade - was supplied by Carlo Erba Reagents (Sabadell, Spain).

Clay-embedded *Glomus iranicum* var. *tenuihypharum* var. nov (Resid HC) supplied by Symborg S.L., Murcia, Spain.

### 2. Used natural gum-based adhesives

- Adhesive made with Arabic gum, glycerol and lactic acid - GA/Glv/AcL.
- Adhesive made with Arabic gum, glycerol, lactic acid and DMSO - GA/Glv/AcL/DMSO.

Table 36 show the composition by weight (percentage) of the Arabic gum-based adhesives with different contents of glycerol and lactic acid, with and without DMSO.

Table 36. Composition in percentage by weight of the Arabic gum adhesives with different contents of glycerol and lactic acid, with and without DMSO.

| Adhesive | GA (%) | Glv (%) | AcL (%) | DMSO (%) | H$_2$O (%) |
|---|---|---|---|---|---|
| GA/Glv/AcL | 15-35 | 0.1-8 | 0.1-5 | - | add to complete 100% |
| GA/Glv/AcL/DMSO | 15-35 | 0.1-8 | 0.1-5 | 5-35 | add to complete 100% |

### 3. Experimental techniques

*Procedure of impregnation of the seeds with Arabic gum adhesives.* The impregnation of corn seeds with clay-embedded *Glomus iranicum* var. *tenuihypharum* var. nov by using the Arabic gum adhesives was carried out in a SATEC CONCEPT ML 2000 equipment (Satec Equipment GmBh, Elmshorn, Germany) with a capacity of 0.5-2.5 dm$^3$ (Figure 4).

**Impregnation of the seeds with clay-embedded *Glomus iranicum* var. *tenuihypharum* var. nov and Arabic gum adhesives.** 400 g seeds were placed into the laboratory coater, the equipment was turned on at maximum power and the adhesive and the clay-embedded *Glomus iranicum* var. *tenuihypharum* var. nov were added alternately and continuously, little by little, in several cycles, the final addition was made with the remaining adhesive.

For the impregnation of the corn seeds, 2 g clay-embedded *Glomus iranicum* var. *tenuihypharum* var. nov and 2 mL adhesive diluted with 2.8 mL water were used.

*In vitro* **germination test.** The seeds treated with Arabic gum adhesives and clay-embedded *Glomus iranicum* var. *tenuihypharum* var. nov biostimulant were placed in Petri dishes with double paper moistened with bidistilled water (6 mL/plate). 200 seeds (25 seeds/plate) were used for each treatment. The plates were placed in small containers sealed with plastic. The seeds were incubated at 25 °C and 65 % relative humidity for 48 hours in the dark and the number of germinated seeds in each treatment was evaluated periodically over time. Seeds treated with water were used as a control. The percentage of germinated seeds was obtained by using Equation (3) :

$$\text{Germination} (\%) = \text{Number of germinated seeds/total number of seeds) x 100}$$

$$\text{Equation (3)}$$

### 4. Results and discussion

The effect caused by Arabic gum adhesives on the seed germination has been evaluated by quantifying the germination percentage (%) obtained in the *in vitro* germination test.

Figure 42 shows the germination values of the corn seeds impregnated with Arabic gum adhesives and with and without clay-embedded *Glomus iranicum* var. *tenuihypharum* var. nov biostimulant. The use of the adhesive containing glycerol and lactic acid enhances the germination percentage of the corn seeds. The use of the adhesive containing glycerol, lactic acid and DMSO enhances even more the germination percentage of the corn seeds. Furthermore, the use of adhesives and clay-embedded *Glomus iranicum* var. *tenuihypharum* var. nov biostimulant causes a more noticeable increase of the germination percentage, and the germination percentage is better when the adhesive contains DMSO.

### 5. Conclusions

- The addition of Arabic gum adhesive containing Glv and AcL induces the germination of the corn seeds.
- The addition of Arabic gum adhesives containing DMSO enhances in greater extent the germination of the corn seeds.
- The addition of Arabic adhesives together with clay-embedded *Glomus iranicum* var. *tenuihypharum* var. nov biostimulant enhances more the germination of the corn seeds than by using the Arabic gum adhesives only. The enhancement of the germination performance is more marked when the Arabic gum adhesive contains DMSO.
- The addition of DMSO in the Arabic gum adhesive has a positive effect in increasing the germination of the corn seeds.

**Claims**

1. An adhesive comprising at least a natural gum, and at least one further component selected from a carboxylic acid, DMSO, surfactin, and mixtures thereof.

2. The adhesive according to claim 1, wherein the natural gum is selected from Arabic gum, tragacanth gum, Peach gum, karaya gum, Gaidi gum, Ghatti gum, rosin resin, Kerensis gum, Guar gum and mixtures thereof.

3. The adhesive according to any previous claim, wherein said natural gum is Arabic gum or tragacanth gum.

4. The adhesive according to any previous claim, wherein the amount of said natural gum is in the range from 0.5% to 55% by weight of the adhesive, preferably 0.6% to 35% by weight of the adhesive, more preferably from 0.6% by weight to 32.5% by weight of the adhesive.

5. The adhesive according to any claim 1 to 3, wherein said natural gum is Arabic gum and wherein the amount of said Arabic gum is in the range from 5% to 55% by weight of the adhesive, preferably 15% to 35% by weight of the adhesive, more preferably from 17.5% by weight to 32.5% by weight of the adhesive.

6. The adhesive according to any claim 1 to 3, wherein said natural gum is tragacanth gum, and wherein the amount of said tragacanth gum is in the range from 0.5% by weight to 2% by weight of the adhesive, preferably, from 0.75% by weight to 1.5% by weight of the adhesive.

7. The adhesive according to any previous claim, wherein said carboxylic acid is selected from saturated aliphatic carboxylic acid, unsaturated aliphatic carboxylic acid, aromatic carboxylic acid, polycarboxylic acid, hydroxy and keto carboxylic acid, and mixtures thereof.

8. The adhesive according to any previous claim, wherein said carboxylic acid is selected from lactic acid, citric acid, caffeic acid, glycolic acid, oxalic acid, malonic acid, ascorbic acid, acetic acid, formic acid, crotonic acid, butyric acid, palmitic acid, stearic acid, adipic acid, sorbic acid, oleic acid, linoleic acid, benzoic acid, gallic acid, salicylic acid, phthalic acid, cinnamic acid, tartaric acid, pyruvic acid, and mixtures thereof.

9. The adhesive according to any previous claim, wherein said carboxylic acid is lactic acid.

10. The adhesive according to any previous claim, wherein the amount of said carboxylic acid, is in the range from 0.005% by weight to 20% by weight of the adhesive, preferably from 0.01% by weight to 5% by weight of the adhesive, more preferably, from 0.02% by weight to 4% by weight of the adhesive.

11. The adhesive according to any previous claim, wherein said natural gum is Arabic gum and said carboxylic acid is lactic acid and wherein the amount of lactic acid is preferably in the range from 0.1% by weight to 10% by weight of the adhesive, more preferably from 0.1% by weight to 5% by weight of the adhesive.

12. The adhesive according to any previous claim, wherein said natural gum is tragacanth gum and said carboxylic acid is lactic acid and wherein the amount of lactic acid is preferably in the range from 0.01% by weight to 0.5% by weight of the adhesive.

13. The adhesive according to any previous claim, wherein the amount of said DMSO is in the range from 0.05% by weight to 50% by weight of the adhesive, preferably from 1% by weight to 40% by weight of the adhesive, more preferably, from 5% by weight to 35% by weight of the adhesive.

14. The adhesive according to any previous claim, further comprising one or more plasticizers, wherein said plasticizers are selected from synthetic plasticizers, natural plasticizers and mixtures thereof.

15. Use of the adhesive according to claim 1 in seed coating.

16. Use of the adhesive according to claim 1 in the production of granules and/or microgranules.

17. Use of the adhesive according to claim 1 to induce germination of seeds, wherein said adhesive comprises DMSO.

18. A seed or an inert core material provided with the adhesive according to any claim 1 to 14.

19. A coated seed or a granule or a microgranule, wherein said coated seed or said granule or microgranule comprises said adhesive according to any claim 1 to 14 and at least one coating material.

20. The coated seed or the granule or microgranule according to claim 19, wherein said coating material is selected from an inert carrier, a colorant, a fungicide, a bio-fungicide, an insecticide, a bio-insecticide, a nematicide, a bio-nematicide, a fertiliser (such as a plant biostimulant) and mixtures thereof.

**GA**

# Figure 1

# Figure 2

**Figure 3**

**Figure 4**

Drive & control unit    Rotating drum    Glass cylinder    Filter unit

**Figure 5**

GA                    GA/AcL

**Figure 6**

GA                    GA/AcL

## Figure 7

## Figure 8

**Figure 9**

**Figure 10**

**Figure 11**

**Figure 12**

**Figure 13**

GA          GA/AcL

**Figure 14**

GA

Figure 15

Figure 16

**Figure 17**

**Figure 18**

**Figure 19**

GA/SB/AcL                    GA/SB/AcL/DMSO

**Figure 20**

GA/SB/AcL                    GA/SB/AcL/DMSO

## Figure 21

## Figure 22

**Figure 23**

**Figure 24**

GA/SB/1DMSO     GA/SB/2DMSO     GA/SB/3DMSO

**Figure 25**

GA/SB/1DMSO

GA/SB/2DMSO

GA/SB/3DMSO

Figure 26

**Figure 27**

**Figure 28**

**Figure 29**

**Figure 30**

**Figure 31**

**Figure 32**

**Figure 33**

**Figure 34**

**Figure 37**

**Figure 38**

Figure 39

GT

GT/Glv/AcL

GT/Glv/AcL/SU

Figure 40

GT GT/Glv/AcL GT/Glv/AcL/SU

# Figure 41

# Figure 42

**EP 4 434 342 A1**

# EUROPEAN SEARCH REPORT

Application Number

EP 23 38 2257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/220454 A1 (CHEN ZHIYUN [US] ET AL) 30 August 2012 (2012-08-30) * the claims; paragraphs 2, 3, 13-30, 41-48 * | 1-20 | INV.<br>A01N1/02<br>A01N25/10<br>A01N25/12<br>A01N25/22 |
| X | CN 104 094 961 B (LIAONING DONGYA SEED CO LTD) 6 April 2016 (2016-04-06) | 1-5,7, 10,13-20 | A01N25/24<br>A01N25/26 |
| Y | * the whole document * | 1-20 | A01N25/30<br>A01N65/20 |
| Y | INÊS ROCHA ET AL: "Seed Coating: A Tool for Delivering Beneficial Microbes to Agricultural Crops", FRONTIERS IN PLANT SCIENCE, vol. 10, 1 November 2019 (2019-11-01), pages 1357-1, XP055691926, CH ISSN: 1664-462X, DOI: 10.3389/fpls.2019.01357 * page 5, left column, first paragraph * | 1-20 | |
| Y | AMIRI MOHAMMAD SADEGH ET AL: "Plant-Based Gums and Mucilages Applications in Pharmacology and Nanomedicine: A Review", MOLECULES, vol. 26, no. 6, 22 March 2021 (2021-03-22) , page 1770, XP093064283, DOI: 10.3390/molecules26061770 * the whole document * | 1-20 | **TECHNICAL FIELDS SEARCHED (IPC)**<br><br>A01N |

-/--

The present search report has been drawn up for all claims

| Place of search | Date of completion of the search | Examiner |
|---|---|---|
| Munich | 8 August 2023 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

## EUROPEAN SEARCH REPORT

Application Number

EP 23 38 2257

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAWHENA TATENDA GIFT ET AL: "Application of Gum Arabic and Methyl Cellulose Coatings Enriched with Thyme Oil to Maintain Quality and Extend Shelf Life of "Acco" Pomegranate Arils", PLANTS, vol. 9, no. 12, 1 December 2020 (2020-12-01), page 1690, XP093064284, DOI: 10.3390/plants9121690 | 1-5,7,8, 10,14-20 | |
| Y | * the whole document * | 1-20 | |
| X | ZHANG YAO ET AL: "Study on the Preparation and Effect of Tomato Seedling Disease Biocontrol Compound Seed-Coating Agent", LIFE, vol. 12, no. 6, 7 June 2022 (2022-06-07), page 849, XP093064302, DOI: 10.3390/life12060849 | 1-5, 15-20 | |
| Y | * the whole document * | 1-20 | TECHNICAL FIELDS SEARCHED (IPC) |
| Y | RIVA, S. C., OPARA, U. O., & FAWOLE, O. A.: "Recent developments on postharvest application of edible coatings on stone fruit: A review.", SCIENTIA HORTICULTURAE, vol. 262, 4 December 2019 (2019-12-04), pages 1-10, XP009545399, * the whole document; in particular, pages 3 and 4 * * pages 3 and 4 * | 1-20 | |

The present search report has been drawn up for all claims

| Place of search | Date of completion of the search | Examiner |
|---|---|---|
| Munich | 8 August 2023 | Lorenzo Varela, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 2257

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2023

| Patent document cited in search report | | Publication date | Patent family member(s) | | Publication date |
|---|---|---|---|---|---|
| US 2012220454 | A1 | 30-08-2012 | AU 2012223522 | A1 | 12-09-2013 |
| | | | CN 103391710 | A | 13-11-2013 |
| | | | EA 201391103 | A1 | 28-02-2014 |
| | | | EP 2680685 | A2 | 08-01-2014 |
| | | | EP 3414983 | A1 | 19-12-2018 |
| | | | ES 2898437 | T3 | 07-03-2022 |
| | | | HU E056081 | T2 | 28-01-2022 |
| | | | MX 364346 | B | 23-04-2019 |
| | | | PL 3414983 | T3 | 27-12-2021 |
| | | | US 2012220454 | A1 | 30-08-2012 |
| | | | WO 2012118795 | A2 | 07-09-2012 |
| CN 104094961 | B | 06-04-2016 | NONE | | |

For more details about this annex : see Official Journal of the European Patent Office, No. 12/82

EPO FORM P0459